(19) Europäisches Patentamt
European Patent Office
Office européen des brevets

(11) EP 3 455 328 B1

(12) EUROPEAN PATENT SPECIFICATION

(45) Date of publication and mention of the grant of the patent:
**04.03.2020 Bulletin 2020/10**

(21) Application number: **17721754.4**

(22) Date of filing: **11.05.2017**

(51) Int Cl.:
***C09K 19/02*** (2006.01) ***C09K 19/04*** (2006.01)

(86) International application number:
**PCT/EP2017/061305**

(87) International publication number:
**WO 2017/194665 (16.11.2017 Gazette 2017/46)**

(54) **BIMESOGENIC COMPOUNDS AND MESOGENIC MEDIA**

BIMESOGENE VERBINDUNGEN UND MESOGENE MEDIEN

COMPOSÉS BIMÉSOGÈNES ET MILIEUX MÉSOGÈNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2016 EP 16169450**

(43) Date of publication of application:
**20.03.2019 Bulletin 2019/12**

(73) Proprietor: **Merck Patent GmbH**
**64293 Darmstadt (DE)**

(72) Inventors:
- **ADLEM, Kevin**
**Bournemouth BH8 9LS (GB)**
- **SAXTON, Patricia**
**Salisbury SP5 2BE (GB)**
- **ARASI, Hassan**
**Eastleigh SO50 9LG (GB)**

(56) References cited:
**WO-A1-2006/066688**
**WO-A1-2013/004333**
**WO-A1-2015/074737**
**WO-A1-2016/008561**
**WO-A1-2016/074762**
**WO-A1-2016/096112**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The invention relates to bimesogenic compounds of formulae IA, ID, IE, IG, IH, IJ, IL, IN and IO, as in claim 1 and defined below, to the use of bimesogenic compounds of said formulae in liquid crystal media and in particular to flexoelectric liquid crystal devices comprising the liquid crystal medium according to the present invention.

Liquid Crystal Displays (LCDs) are widely used to display information. LCDs are used for direct view displays as well as for projection type displays. A still widely employed electro-optical mode for displays is the twisted nematic (TN) mode with its various modifications.

Besides this mode, the super twisted nematic (STN) mode and more recently the optically compensated bend (OCB) mode and the electrically controlled birefringence (ECB) mode with their various modifications, such as the vertically aligned nematic (VAN), the patterned ITO vertically aligned nematic (PVA), the polymer stabilized vertically aligned nematic (PSVA) mode and the multi domain vertically aligned nematic (MVA) mode as well as others, have been increasingly employed. All these modes use an electric field which is substantially perpendicular to the substrates, respectively to the liquid crystal layer.

Besides these modes, there are also electro-optical modes employing an electric field substantially parallel to the substrates, respectively the liquid crystal layer, like e.g. the in plane switching (IPS) mode, as disclosed e.g. in DE 40 00 451 and EP 0 588 568, and the fringe field switching (FFS) mode.

Especially the latter mentioned electro-optical modes, which have good viewing angle properties and improved response times, are increasingly used for LCDs for modern desktop monitors and for displays for TV and for multimedia applications and thus are competing with the TN-LCDs.

In addition to these display modes, new modes using cholesteric liquid crystals having a relatively short cholesteric pitch have been proposed for use in displays exploiting the so-called "flexoelectric" effect.

The flexoelectric effect is described *inter alia* by Chandrasekhar, "Liquid Crystals", 2nd edition, Cambridge University Press (1992) and P.G. de Gennes et al., "The Physics of Liquid Crystals", 2nd edition, Oxford Science Publications (1995).

In displays using the flexoelectric effect the cholesteric liquid crystals are typically oriented in the "uniformly lying helix" arrangement (ULH), which gives this display mode its name. Therein a chiral substance which is mixed with a nematic material induces a helical twist transforming the material into a chiral nematic material, which is equivalent to a cholesteric material.

The pitch induced by the chiral substance (Po) is in a first approximation inversely proportional to the concentration (c) of the chiral material used. The constant of proportionality of this relation is called the helical twisting power (HTP) of the chiral substance and is defined by equation (1)

$$HTP \equiv 1 / (c \cdot P_0) \qquad (1)$$

wherein

c is the concentration of the chiral compound.

The uniformly lying helix texture is realized using a chiral nematic liquid crystal with a short pitch, typically in the range from 0.2 μm to 1 μm, in particular of 0.5 μm or less, and which is unidirectionally aligned with its helical axis parallel to the substrates, e. g. glass plates, of a liquid crystal cell. In this configuration the helical axis of the chiral nematic liquid crystal is equivalent to the optical axis of a birefringent plate.

When an electric field is applied to this configuration normal to the helical axis the optical axis is rotated in the plane of the cell, similar to the director of a ferroelectric liquid crystal rotating in a surface stabilized ferroelectric liquid crystal display. Such displays using the flexoelectric effect may potentially provide benefits in terms of fast response times and grey scale capabilities.

The applied electric field can induce a splay bend structure in the director which is accommodated by a tilt in the optical axis. The angle of the rotation of the axis is in first approximation directly and linearly proportional to the strength of the electric field. The optical effect is best seen when the liquid crystal cell is placed between crossed polarizers with the optical axis in the unpowered state at an angle of 22.5° to the absorption axis of one of the polarizers. This angle of 22.5° is also the ideal angle of rotation of the electric field. Namely as thus, by the inversion of the electric field the optical axis is rotated by 45° and by appropriate selection of the relative orientations of the preferred direction of the axis of the helix, the absorption axis of the polarizer and the direction of the electric field, the optical axis can be switched from parallel to one polarizer to the centre angle between both polarizers. The optimum contrast is then achieved when the total angle of the switching of the optical axis is 45°. In such a case the arrangement can be used as a switchable quarter-wave plate, provided the optical retardation, i.e. the product of the effective birefringence of the liquid crystal

and the cell gap, is selected to be the quarter of the given wavelength.

The angle of rotation of the optical axis ($\Phi$) is given in good approximation by formula (2)

$$\tan \Phi = \bar{e}\, P_0\, E / (2\, \pi\, K) \qquad (2)$$

wherein

- Po is the undisturbed pitch of the cholesteric liquid crystal,
- $\bar{e}$ is the average [$\bar{e}$ = ½ ($e_{splay}$ + $e_{bend}$)] of the splay flexoelectric coefficient ($e_{splay}$) and the bend flexoelectric coefficient ($e_{bend}$),
- E is the electric field strength and
- *K* is the average [$K$ = ½ ($k_{11}$ + $k_{33}$)] of the splay elastic constant ($k_{11}$) and the bend elastic constant ($K_{33}$).

The ratio $\bar{e}/K$ is called the flexoelastic ratio.

This angle of rotation is half the switching angle in a flexoelectric switching element.

The response time ($\tau$) of this electro-optical effect is given in good approximation by formula (3)

$$\tau = [P_0/(2\, \pi)]^2 \cdot \gamma / K \qquad (3)$$

wherein

- $\gamma$ is the effective viscosity coefficient associated with the distortion of the helix.

There is a critical field ($E_c$) to unwind the helix, which can be obtained from equation (4)

$$E_c = (\pi^2 / P_0) \cdot [k_{22}/(\varepsilon_0 \cdot \Delta\varepsilon)]^{1/2} \qquad (4)$$

wherein

- $k_{22}$ is the twist elastic constant,
- $\varepsilon_0$ is the permittivity of vacuum and
- $\Delta\varepsilon$ is the dielectric anisotropy of the liquid crystal.

In this mode, however, several problems are still unresolved, which are, amongst others, difficulties in obtaining the required uniform orientation, an unfavourably high voltage required for addressing which is incompatible with common driving electronics, a not really dark "off state" which deteriorates the contrast and a pronounced hysteresis in the electro-optical characteristics.

As an alternative mode, e.g. to the IPS mode, a relatively new display mode, the so-called uniformly standing helix (USH) mode, may be considered. The USH mode can show improved black levels, even compared to other display modes providing wide viewing angles (e.g. IPS, VA etc.).

For the USH mode, like for the ULH mode, flexoelectric switching has been proposed, using bimesogenic liquid crystal materials. Flexoelectric liquid crystal materials and in particular bimesogenic compounds are known in general from the prior art, see e.g. Hori, K., limuro, M., Nakao, A., Toriumi, H., J. Mol. Struc. 2004, 699, 23-29, WO 2013/004333 A1 and WO 2016/008561 A1.

However, due to the unfavourably high driving voltage required, the relatively narrow phase range of the chiral nematic materials and their irreversible switching properties, materials from prior art are incompatible with the use in current LCD driving schemes.

For displays of the ULH and USH mode, particular characteristics and parameters can contribute to functionality, especially the birefringence ($\Delta n$). The birefringence $\Delta n$ herein is defined in equation (5)

$$\Delta n = n_e - n_o \qquad (5)$$

wherein $n_e$ is the extraordinary refractive index and $n_o$ is the ordinary refractive index.

The effective or average refractive index $n_{av.}$ is given by the following equation (6).

$$n_{av.} = [(2\ n_o^2 + n_e^2)/3]^{1/2} \qquad (6)$$

The extraordinary refractive index $n_e$ and the ordinary refractive index $n_o$ can be measured using an Abbe refractometer. $\Delta n$ can then be calculated from equation (5).

Furthermore, for displays utilizing the ULH and USH mode the optical retardation, d*$\Delta$n (effective), of the liquid crystal media should preferably be such that equation (7)

$$\sin^2(\pi \cdot d \cdot \Delta n/\lambda) = 1 \qquad (7)$$

wherein

d is the cell gap and

$\lambda$ is the wavelength of light

is satisfied. The allowance of deviation for the right hand side of equation (7) is typically +/- 3 %.

Moreover, for the ULH/USH mode the dielectric anisotropy ($\Delta\varepsilon$), defined as ($\varepsilon_{||} - \varepsilon_{\perp}$), with $\varepsilon_{av.}$ being ($\varepsilon_{||} + 2\ \varepsilon_{\perp}$) / 3, should typically be as small as possible to prevent unwinding of the helix upon application of the addressing voltage.

Liquid crystal compositions with short cholesteric pitch for flexoelectric devices are known from EP 0 971 016, GB 2 356 629 and Coles, H.J., Musgrave, B., Coles, M.J., and Willmott, J., J. Mater. Chem., 11, p. 2709-2716 (2001). EP 0 971 016 describes mesogenic estradiols, which, as such, have a high flexoelectric coefficient. GB 2 356 629 describes broad generic formulae of bimesogenic compounds and the use of these bimesogenic compounds in flexoelectric devices. The flexoelectric effect therein has been investigated so far in pure cholesteric liquid crystal compounds and in mixtures of homologous compounds only. Most of these compounds were used in binary mixtures consisting of a chiral additive and a nematic liquid crystal material being either a simple, conventional monomesogenic material or a bimesogenic material. These materials have several drawbacks for practical applications, like insufficient temperature ranges of the chiral nematic or cholesteric phase, insufficient flexoelastic ratios and insufficient small angles of rotation.

Non-symmetrically linked bimesogenic compounds are proposed e.g. in WO 2014/005672.

EP 0 233 688 describes bis(phenylethanolamines) and bis(phenoxypropanolamines) useful as beta-agonists.

In Macro Rings. 11. Polynuclear Paracyclophanes' H. Steinberg, Donald J Cram, JACS, (1952), 74, p. 5388-91 related compounds are also described.

Thus, for displays of the ULH and USH mode there is a need in the art for novel liquid crystalline substances and media with advantageous and improved properties.

An object of the present invention is to provide suitable mesogenic compounds which exhibit desirable properties and provide benefits when used in liquid crystal media such that the compounds and the media are useful in and contribute to flexoelectric devices with improved characteristics, in particular in terms of high switching angles and fast response times. In particular, it is an object of the present invention to provide liquid crystal materials which exhibit advantageous properties, e.g. a suitable ratio of $\bar{e}/K$, for use in flexoelectric displays and which therein enable tuning of the working temperature range, while overall a favourably uniform alignment over the entire area of the display cell is obtainable, preferably without the use of a mechanical shearing process, as well as good contrast, high switching angles and fast response times also at low temperatures. In addition, it is an object to provide liquid crystal materials which exhibit low melting points, broad chiral nematic phase ranges, short and temperature-independent pitch lengths and a suitably large flexoelectric effect. Besides suitably wide ranges of the nematic phase, the media should exhibit a rather small rotational viscosity and an at least moderately high specific resistivity. Further objects of the present invention are immediately evident to the person skilled in the art from the following detailed description.

The object is solved by the subject-matter defined in the independent claims, while preferred embodiments are set forth in the respective dependent claims and are further described below.

The present invention in particular provides the following items including main aspects, preferred embodiments and particular features, which respectively alone and in combination contribute to solving the above object and eventually provide additional advantages.

It was surprisingly found that bimesogenic compounds according to claim 1 and as given below can exhibit desirable properties on their own and especially when provided in a liquid crystalline medium. The compounds according to the present invention are especially useful in that the liquid crystal phase range of the liquid crystal material can be set and adjusted, while at the same time favourably maintaining the desired flexoelectric properties. These compounds can thus be particularly advantageous for use in and tuning of mixtures having suitably high e/K, for example by adjusting

and optimizing the nematic to twist-bend nematic transition temperature and by favourably influencing the working temperature range of devices using the flexoelectro-optic effect.

Furthermore, the provision of the bimesogenic compounds according to the present invention, in particular in chiral nematic liquid crystal mixtures, can lead to low melting points and broad chiral nematic phases, which exhibit relatively high values of the elastic constant $k_{11}$, low values of the bend elastic constant $k_{33}$, and a suitable flexoelectric coefficient.

In the present invention it was advantageously recognized that the properties of bimesogenic compounds and media, including the flexoelectric properties, can be highly dependent on the molecular shape and the dipole direction of the molecule. Among others, the presence or absence as well as the position of polar but also non-polar groups can have an impact on the polarizability and the direction and magnitude of the molecular dipole moment. These properties can in turn have an influence on intermolecular interactions, molecular packing and the physical properties of the medium and can ultimately influence *inter alia* the flexoelectric properties.

In another aspect the invention relates to a liquid crystalline medium which comprises one or more bimesogenic compounds according to the invention.

A further aspect of the present invention is a liquid crystal device comprising a liquid crystalline medium which comprises two or more components, wherein one or more of the components is the bimesogenic compound according to the invention.

It is understood that according to the present invention for a given element, in particular for H, C, N, O, F, S, Cl and Br, all possible isotopes are comprised. As such, hydrogen and in particular the hydrogen as the terminal group(s) comprises all isotopes, in particular $^1H$ and $^2H$.

The term "liquid crystal", "mesomorphic compound" or "mesogenic compound", also shortly referred to as "mesogen", means a compound which under suitable conditions of temperature, pressure and concentration can exist as a mesophase (nematic, smectic, etc.) or in particular as a LC phase. Non-amphiphilic mesogenic compounds comprise for example one or more calamitic, banana-shaped or discotic mesogenic groups.

The term "bimesogenic compound" as used herein relates to compounds comprising two mesogenic groups in the molecule. Like normal mesogens they can form many mesophases, depending on their structure. In particular, the compounds of formula I may induce a second nematic phase when added to a nematic liquid crystal medium.

The term "mesogenic group" means in this context a group with the ability to induce liquid crystal (LC) phase behaviour. The compounds comprising mesogenic groups, in particular the bimesogenic compounds according to the present invention do not necessarily have to exhibit an LC phase themselves. It is also possible that they show LC phase behaviour only in mixtures with other compounds. For the sake of simplicity, the term "liquid crystal" is used hereinafter for both mesogenic and LC materials.

The term "chiral" in general is used to describe an object that is non-superimposable on its mirror image. "Achiral" (non-chiral) objects are objects that are identical to their mirror image. The terms chiral nematic and cholesteric are used synonymously in this application, unless explicitly stated otherwise.

The wavelength of light referred to in this application is 550 nm, unless explicitly specified otherwise.

The cell gap of the cells preferably is in the range from 1 μm to 20 μm, in particular within the range from 2.0 μm to 10 μm.

For the ULH and USH mode, it is found that the dielectric anisotropy ($\Delta\varepsilon$) should preferably be as small as possible to prevent unwinding of the helix upon application of the addressing voltage. Preferably, $\Delta\varepsilon$ should be slightly higher than 0 and more preferably be 0.1 or more, but preferably 10 or less, more preferably 7 or less and even more preferably 5 or less. In the present application the term "dielectrically positive" is used for compounds or components with $\Delta\varepsilon > 3.0$, "dielectrically neutral" with $-1.5 \leq \Delta\varepsilon \leq 3.0$ and "dielectrically negative" with $\Delta\varepsilon < -1.5$.

$\Delta\varepsilon$ is determined at a frequency of 1 kHz and at 20 °C. The dielectric anisotropy of the respective compound is determined from the results of a solution of 10 % of the respective individual compound in a nematic host mixture. In case the solubility of the respective compound in the host medium is less than 10 % its concentration is reduced by a factor of 2 until the resultant medium is stable enough at least to allow the determination of its properties. Preferably the concentration is kept at least at 5 %, however, in order to keep the significance of the results as high as possible. The respective capacitance of the test mixtures is determined both in a cell with homeotropic and with homogeneous alignment. For this measurement the cell gap of both types of cells is approximately 20 μm. The voltage applied is a rectangular wave with a frequency of 1 kHz and a root mean square value typically of 0.5 V to 1.0 V, however, it is always selected to be below the capacitive threshold of the respective test mixture.

$\Delta\varepsilon$ is defined as ($\varepsilon_{||} - \varepsilon_{\perp}$), and $\varepsilon_{av.}$ is ($\varepsilon_{||} + 2\,\varepsilon_{\perp}$) / 3. The dielectric permittivity of the compounds is determined from the change of the respective values of a host medium upon addition of the compounds of interest. The values are extrapolated to a concentration of the compounds of interest of 100 %. The typical host mixture is disclosed in H.J. Coles et al., J. Appl. Phys. 2006, 99, 034104 and has the composition given in Table 1.

Table 1. Host mixture composition

| Compound | Concentration |
|---|---|
| F-PGI-ZI-9-Z-GP-F | 25 % |
| F-PGI-ZI-11-Z-GP-F | 25 % |
| F-PGI-O-5-O-PP-N | 9.5 % |
| F-PGI-O-7-O-PP-N | 39 % |
| CD-1 | 1.5 % |

Without limiting the present invention thereby, in the following the invention is illustrated by the detailed description of the aspects, embodiments and particular features, and particular embodiments are described in more detail.

In a first aspect the invention relates to the bimesogenic compound of claim 1 and as given below.

It was surprisingly found that compounds according to the invention can be particularly advantageous for use in and tuning of mixtures having suitably high flexoelastic ratios, especially for setting or adjusting the working temperature range without negatively impacting the overall flexoelastic ratio and component solubilities.

Bimesogenic compounds of the present invention are selected from the group of compounds of the formulae IA, ID, IE, IG, IH, IJ, IL, IN and IO,

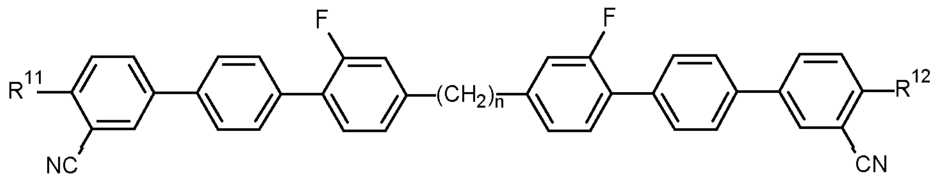

IA

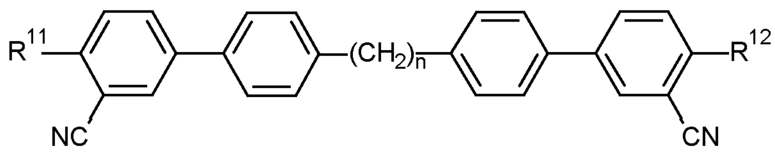

ID

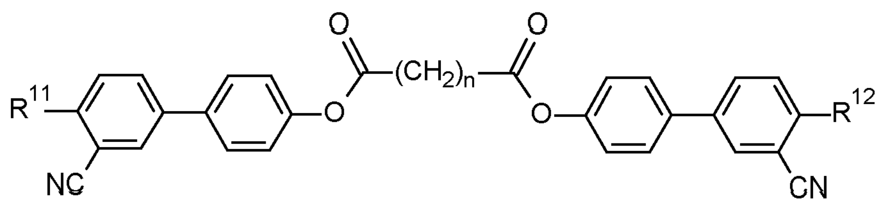

IE

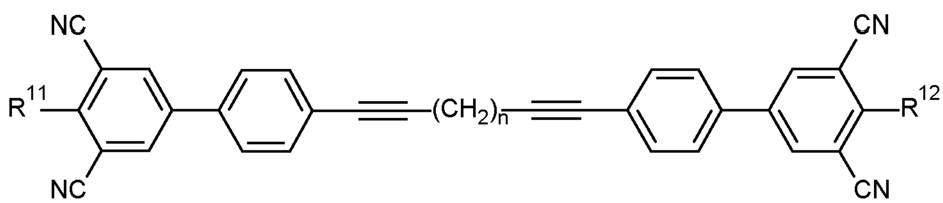

IG

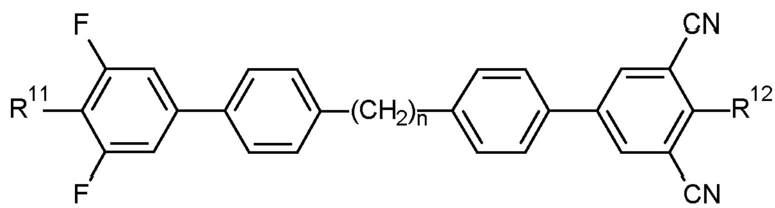

IH

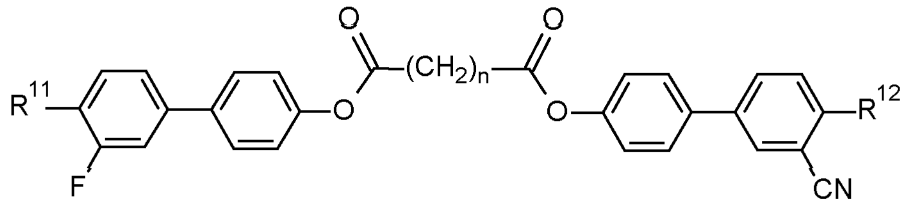

IL

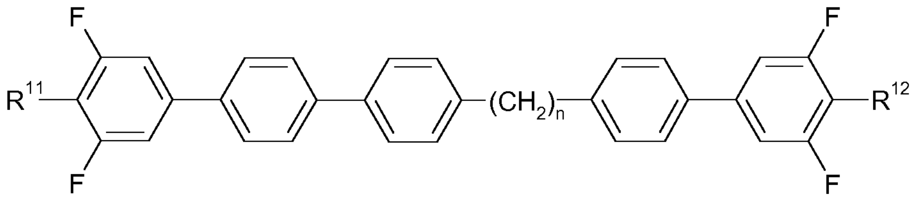

IN

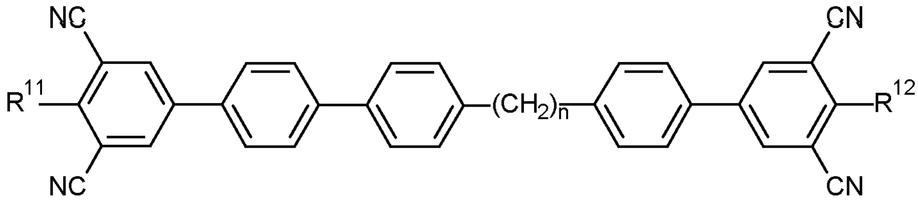

IO

wherein the alkylene spacers $-(CH_2)_n-$ shown are exemplary only and n therein is an integer of 3 or from 5 to 15, preferably 5, 7 or 9, and wherein $R^{11}$ and $R^{12}$ are H.

The compounds according to the invention can be synthesized according to or in analogy to methods which are known *per se* and which are described in standard works of organic chemistry such as, for example, Houben-Weyl, Methoden der organischen Chemie, Thieme-Verlag, Stuttgart. A preferred method of preparation can be taken from the following synthesis schemes.

Synthesis Scheme 1: Preparation of

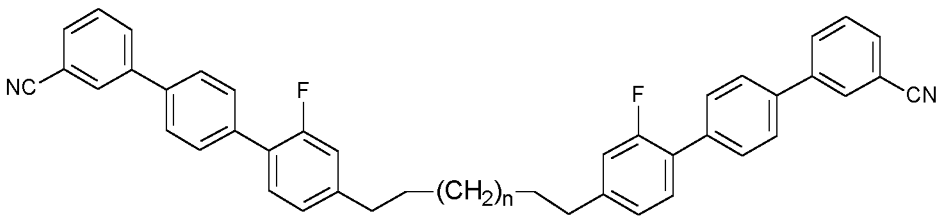

The compounds of interest can be prepared according to the following scheme.

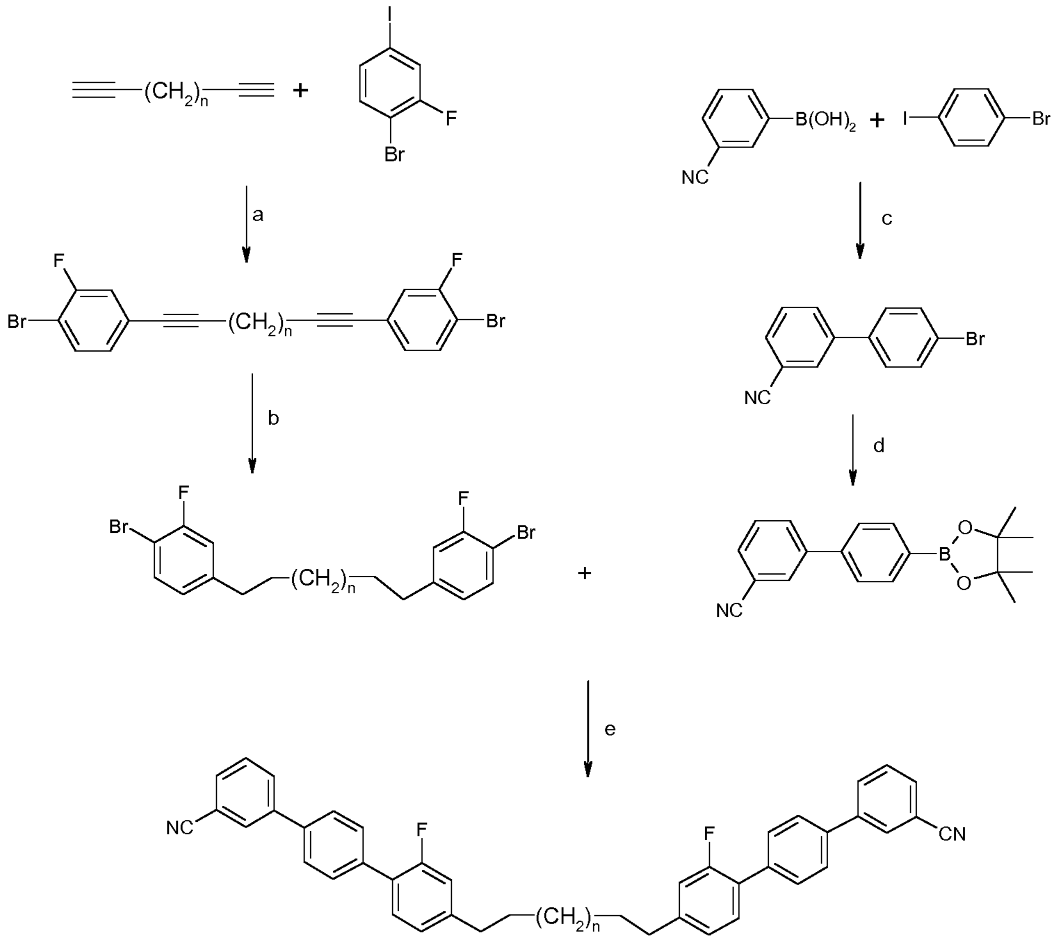


wherein the alkylene spacers $-(CH_2)n-$ shown are exemplary only, wherein n is an integer selected from 3 and 5 to 15, preferably from 5, 7 and 9.

In the conversion steps are preferably used

a) $Pd(PPh_3)_2Cl_2$, Cu(I)I, DIPA, THF
b) $H_2$, Pd/C, THF
c) $Pd(PPh_3)_2Cl_2$, $K_2CO_3$, $H_2O$, THF
d) Bis(pinacolato)diboron, $Pd[P(cy)_3]_2Cl_2$, KOAc, $H_2O$, THF
e) $Pd(PPh_3)_2Cl_2$, $NaBO_2$, $H_2O$, THF.

Synthesis Scheme 2: (not according to the invention) Preparation of

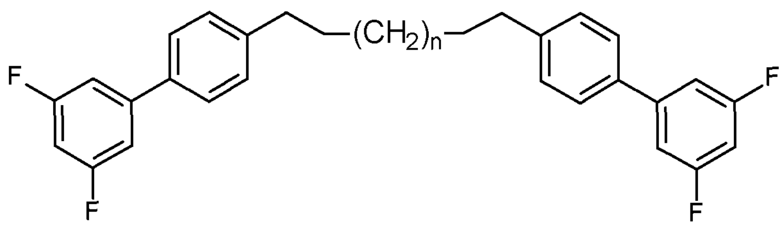

The compounds of interest can be prepared according to the following scheme.

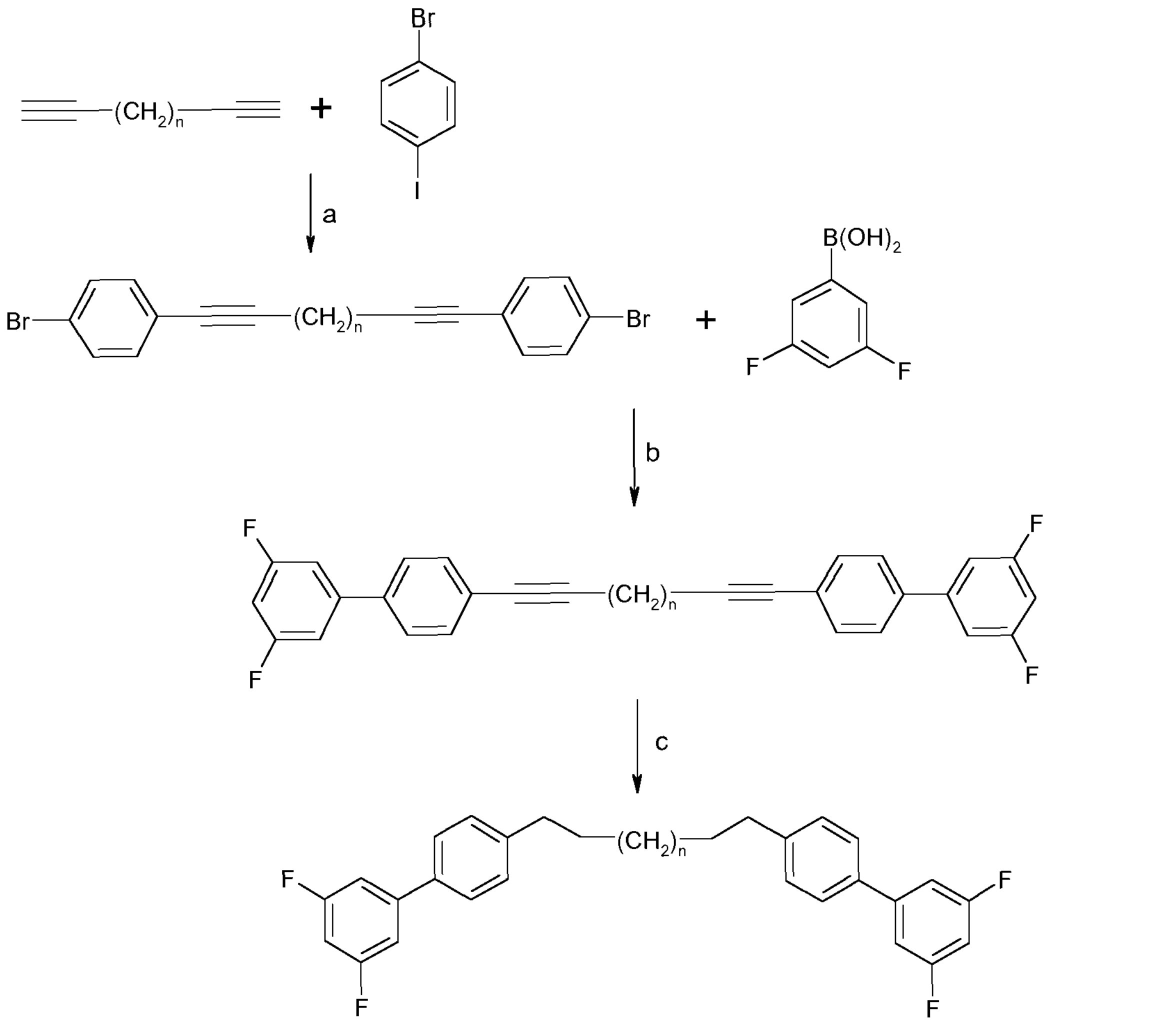


wherein the alkylene spacers $-(CH_2)_n-$ shown are exemplary only, wherein n is an integer selected from 3 and 5 to 15, preferably from 5, 7 and 9.

In the conversion steps are preferably used

a) $Pd(PPh_3)_2Cl_2$, Cu(I)I, DIPA, THF
b) $Pd(PPh_3)_2Cl_2$, $Na_2CO_3$, $H_2O$, THF
c) $H_2$, Pd/C, THF.

Synthesis Scheme 3: Preparation of

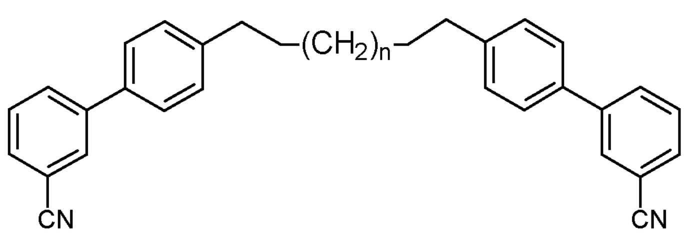

The compounds of interest can be prepared according to the following scheme.

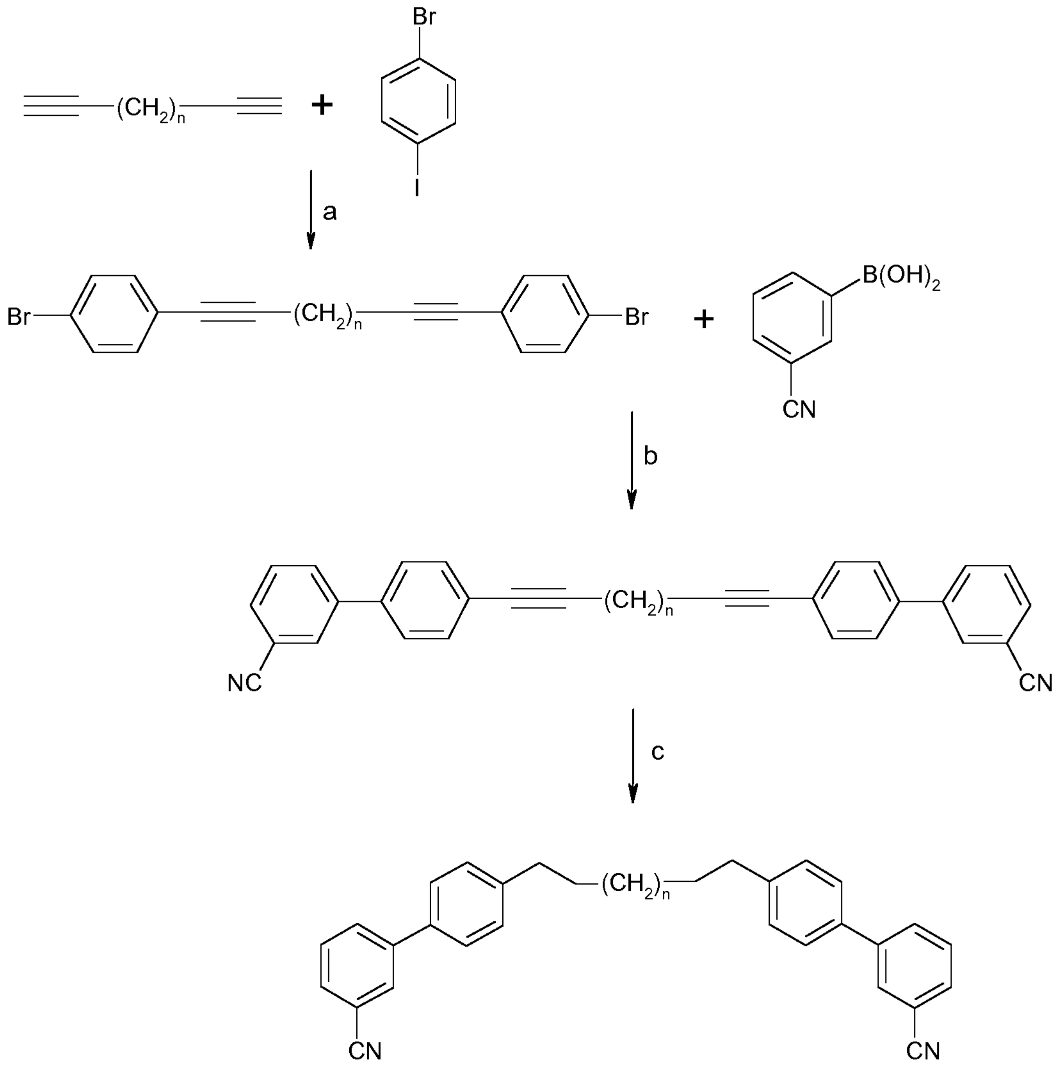


wherein the alkylene spacers $-(CH_2)_n-$ shown are exemplary only, wherein n is an integer selected from 3 and 5 to 15, preferably from 5, 7 and 9.

In the conversion steps are preferably used

a) $Pd(PPh_3)_2Cl_2$, Cu(I)I, DIPA, THF
b) $Pd(dppf)Cl_2$, $Na_2CO_3$, $H_2O$, Dioxane
c) $H_2$, Pd/C, THF.

Synthesis Scheme 4: Preparation of

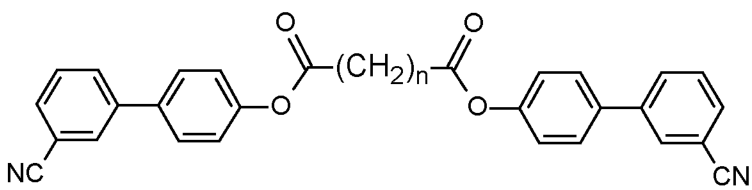

The compounds of interest can be prepared according to the following scheme.

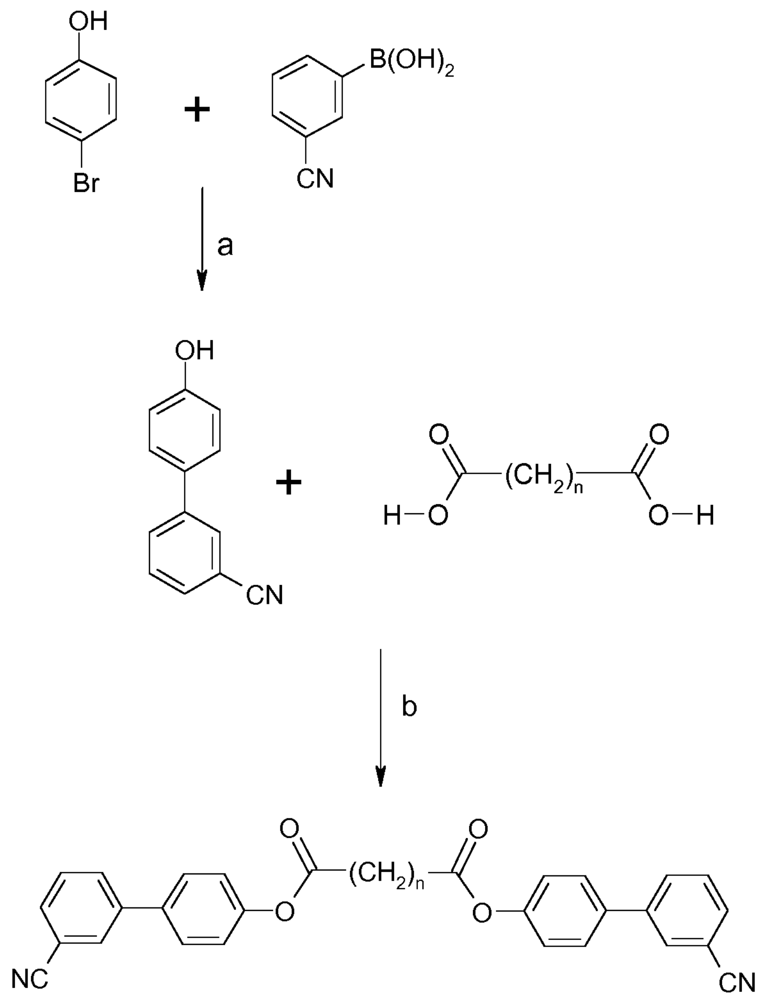


wherein the alkylene spacers $-(CH_2)_n-$ shown are exemplary only, wherein n is an integer selected from 3 and 5 to 15, preferably from 5, 7 and 9.

In the conversion steps are preferably used

a) $Pd(dppf)Cl_2$, $Na_2CO_3$, $H_2O$, Dioxane
b) DCC, DMAP, DCM.

The compounds of formula I are preferably accessible according to the exemplified reaction scheme(s).

The bimesogenic compounds according to the invention are useful in liquid crystalline media, wherein one or more of said compounds may be used in a respective medium.

When added to a nematic liquid crystalline mixture compounds according to the invention may produce a phase below the nematic. An indication of the influence of bimesogenic compounds on nematic liquid crystal mixtures was reported by Barnes, P.J., Douglas, A.G., Heeks, S.K., Luckhurst, G.R., Liquid Crystals, 1993, Vol.13, No.4, 603- 613. In particular, this reference exemplifies highly polar alkyl spacered dimers and perceives a phase below the nematic, presumably a type of smectic.

A photograph of an existing mesophase below the nematic phase was published by Henderson, P.A., Niemeyer, O., Imrie, C.T. in Liquid Crystals, 2001, Vol. 28, No.3, 463-472, but which was not further investigated.

In Liquid Crystals, 2005, Vol. 32, No. 11-12, 1499-1513 Henderson, P.A., Seddon, J.M. and Imrie, C.T. reported that the phase below the nematic belonged in some special examples to a smectic C phase. An additional nematic phase below the first nematic was reported by Panov, V.P., Ngaraj, M., Vij, J.K., Panarin, Y.P., Kohlmeier, A., Tamba, M.G., Lewis, R.A. and Mehl, G.H. in Phys.Rev.Lett. 2010, 105, 1678011-1678014.

It is noted that liquid crystal mixtures comprising the inventive bimesogenic compounds may also show a mesophase that is being assigned as a second nematic phase. This mesophase exists at a lower temperature than the original nematic liquid crystalline phase and may be observed in the present mixture concepts.

Accordingly, the bimesogenic compounds according to the present invention may allow the second nematic

phase to be induced in nematic mixtures that do not have this phase normally. Furthermore, varying the amounts of the compounds of can allow the phase behaviour of the second nematic to be tailored to the required temperature.

In another aspect the invention thus relates to a liquid crystalline medium which comprises one or more bimesogenic compounds according to the invention.

Preferred embodiments of liquid crystal compositions and mixtures according to the invention are indicated below.

The media according to the invention preferably comprise one, two, three, four or more, preferably one, two or three, compounds of the formulae IA, ID, IE, IG, IH, IJ, IL, IN and IO.

The amount of compounds according to the invention in the liquid crystalline medium is preferably from 1 to 50 %, more preferably from 5 to 40 % and even more preferably from 10 to 30 % by weight of the total mixture.

In a preferred embodiment the liquid crystalline medium according to the present invention comprises additionally one or more compounds of formula II, like those or similar to those known from GB 2 356 629,

$$R^{21}\text{-}MG^{21}\text{-}X^{21}\text{-}Sp^{2}\text{-}X^{22}\text{-}MG^{22}\text{-}R^{22} \qquad \text{II}$$

wherein

| | |
|---|---|
| $R^{21}$ and $R^{22}$ | are each independently H, F, Cl, CN, NCS or a straight-chain or branched alkyl group with 1 to 25 C atoms, said alkyl group optionally being substituted by one or more halogen and/or CN groups and optionally having one or more non-adjacent $CH_2$ groups replaced, in each occurrence independently from one another, by -O-, -S-, -NH-, -N($CH_3$)-, -CO-, -COO-, -OCO-, -O-CO-O-, -S-CO-, -CO-S-, -CH=CH-, -CH=CF-, -CF=CF- or -C=C-, |
| $MG^{21}$ and $MG^{22}$ | are each independently a mesogenic group, |
| $Sp^2$ | is a spacer group comprising 5 to 40 C atoms, wherein one or more non-adjacent $CH_2$ groups may also be replaced by -O-, -S-, -NH-, -N($CH_3$)-, -CO-, -O-CO-, -S-CO-, -O-COO-, -CO-S-, -CO-O-, -CH(halogen)-, -CH(CN)-, -CH=CH- or -C≡C-, and |
| $X^{21}$ and $X^{22}$ | are each independently -O-, -S-, -CO-, -COO-, -OCO-, -O-CO-O-, -CO-NH-, -NH-CO-, -$CH_2CH_2$-, -$OCH_2$-, -$CH_2O$-, -$SCH_2$-, -$CH_2S$-, -CH=CH-, -CH=CH-COO-, -OCO-CH=CH-, -C≡C- or a single bond, |

provided that the compounds according to the invention are excluded from the compounds of formula II.

The mesogenic groups $MG^{21}$ and $MG^{22}$ are preferably selected from the structures as define above in (partial) formula III.

In an embodiment compounds of formula II are preferred wherein $R^{21}$-$MG^{21}$-$X^{21}$- and $R^{22}$-$MG^{22}$-$X^{22}$- are identical.

Another embodiment of the present invention relates to compounds of formula II wherein $R^{21}$-$MG^{21}$-$X^{21}$- and $R^{22}$-$MG^{22}$-$X^{22}$- are different.

Especially preferred are compounds of formula II wherein the mesogenic groups $MG^{21}$ and $MG^{22}$ comprise one, two or three six-membered rings. Particularly preferable are the mesogenic groups selected from the subformulae IV-1, IV-4, IV-6, IV-7, IV-13, IV-14, IV-15, IV-16, IV-17 and IV-18. In these preferred groups Z in each case independently has one of the meanings of $Z^{11}$ as given in formula III. Preferably Z is -COO-, -OCO-, -$CH_2CH_2$-, -C≡C- or a single bond.

Preferably, compounds of formula II have polar terminal groups. In particular, $R^{21}$ and $R^{22}$ are preferably selected from CN, $NO_2$, halogen, $OCH_3$, OCN, SCN, $COR^x$ or $COOR^x$, wherein $R^x$ is optionally fluorinated alkyl with 1 to 4 C atoms, preferably 1 to 3 C atoms. Halogen preferably is F or Cl, more preferably is F.

Especially preferably $R^{21}$ and $R^{22}$ in formula II are selected from F, Cl, CN, $NO_2$, $OCH_3$, $COCH_3$, $COC_2H_5$, $COOCH_3$, $COOC_2H_5$, $CF_3$, $C_2F_5$, $OCF_3$, $OCHF_2$ and $OC_2F_5$, in particular from F, Cl, CN, $OCH_3$ and $OCF_3$.

As for the spacer group $Sp^2$ in formula II, all groups can be used that are known for this purpose in the art. The spacer group $Sp^2$ preferably is a linear or branched alkylene group having 5 to 40 C atoms, more preferably 5 to 25 C atoms, even more preferably 5 to 15 C atoms, in which, in addition, one or more non-adjacent $CH_2$ groups may be replaced by -O-, -S-, -NH-, -N($CH_3$)-, -CO-, -O-CO-, -S-CO-, -O-COO-, -CO-S-, -CO-O-, -CH(halogen)-, -CH(CN)-, -CH=CH- or -C≡C-.

Typical spacer groups are for example $-(CH_2)_o-$, $-(CH_2CH_2O)_p-CH_2CH_2-$, $-CH_2CH_2-S-CH_2CH_2-$ or $-CH_2CH_2-NH-CH_2CH_2-$, with o being an integer from 5 to 40, preferably from 5 to 25, even more preferably from 5 to 15, and p being an integer from 1 to 8, in particular 1, 2, 3 or 4.

Preferred spacer groups are, for example, pentylene, hexylene, heptylene, octylene, nonylene, decylene, undecylene, dodecylene, octadecylene, diethyleneoxyethylene, dimethyleneoxybutylene, pentenylene, heptenylene, nonenylene and undecenylene.

Especially preferred are compounds of formula II, wherein $Sp^2$ is denoting alkylene with 5 to 15 C atoms. Straight-chain alkylene groups are especially preferred.

In another preferred embodiment of the invention chiral compounds of formula II comprise at least one spacer group that is a chiral group.

$X^{21}$ and $X^{22}$ in formula II denote preferably -O-, -CO-, -COO-, -OCO-, -O-CO-O- or a single bond.

Particularly preferred are the following compounds selected from formulae II-1 to II-4:

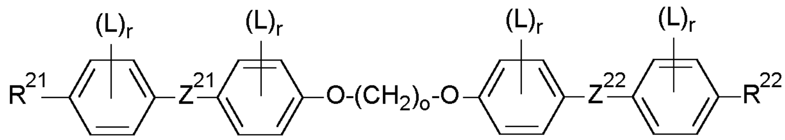

II-1

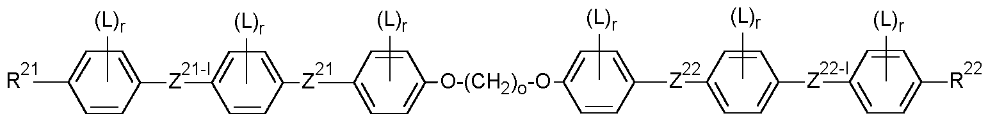

II-2

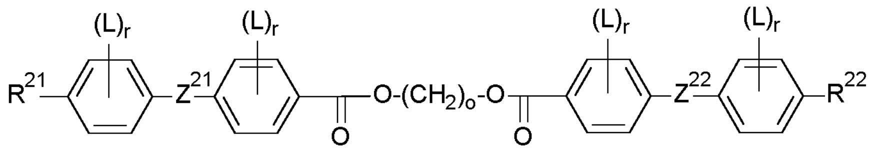

II-3

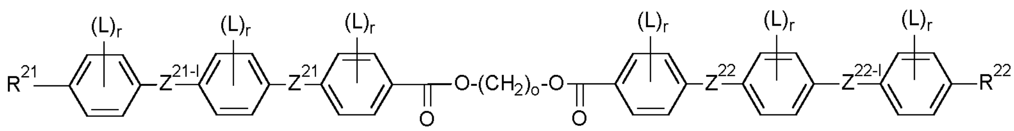

II-4

wherein $R^{21}$ and $R^{22}$ have the meanings given under formula II, $Z^{21}$, $Z^{21-I}$, $Z^{22}$ and $Z^{22-I}$ are defined as $X^{21}$ and $X^{22}$ in formula II or are respectively the reverse groups of $X^{21}$ and $X^{22}$, and o and r are independently at each occurrence as defined above, including the preferred meanings of these groups and wherein L is as defined above, wherein compounds of formula I are excluded.

Particularly preferred mixtures according to the invention comprise one or more compounds of the formulae II-1 a to II-1 e and II-3a to II-3b.

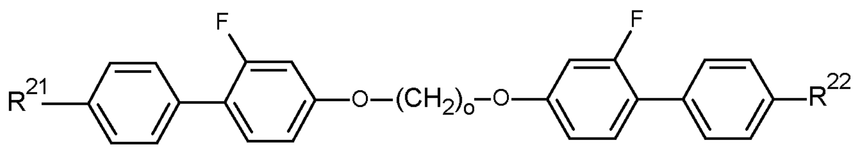

II-1a

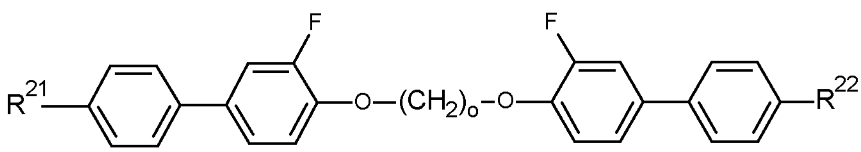

II-1b

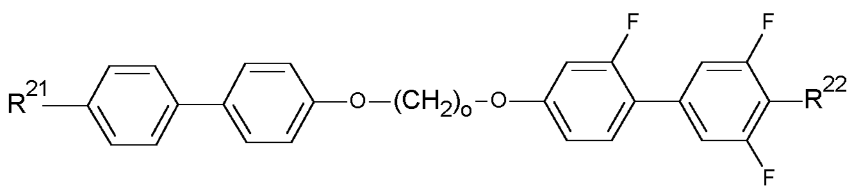

II-1c

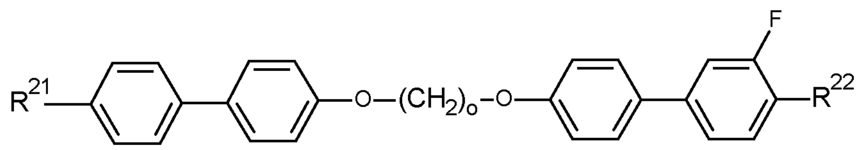

II-1d

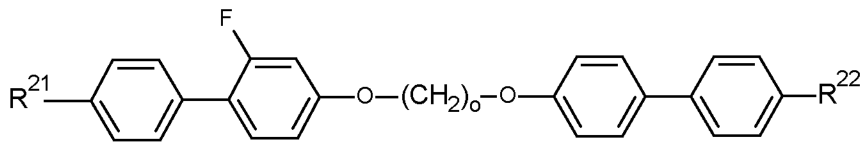

II-1e

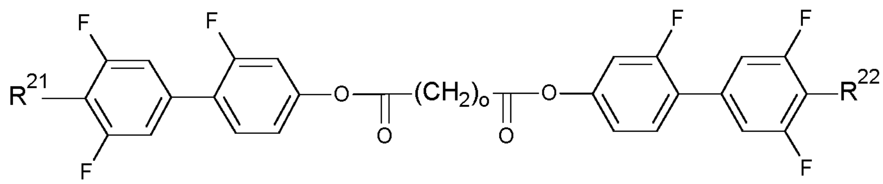

II-3a

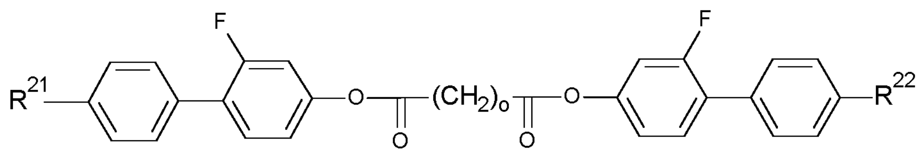

II-3b

wherein $R^{21}$, $R^{22}$ and o are as defined above.

In a preferred embodiment of the invention the liquid crystalline medium is containing 2 to 25, preferably 3 to 15 compounds of formula II.

The amount of compounds of formula II in the liquid crystalline medium is preferably from 10 to 95 %, more preferably from 15 to 90 %, even more preferably from 20 to 85 % by weight of the total mixture.

Preferably, the proportion of compounds of the formulae II-1a and/or II-1 b and/or II-1c and/or II-1e and/or II-3a and/or II-3b in the medium as a whole is preferably at least 70 % by weight.

Particularly preferred media according to the invention comprise one or more chiral dopants, which themselves may or may not show a liquid crystalline phase and which themselves may or may not give good uniform alignment.

Especially preferred are chiral dopants selected from formula V

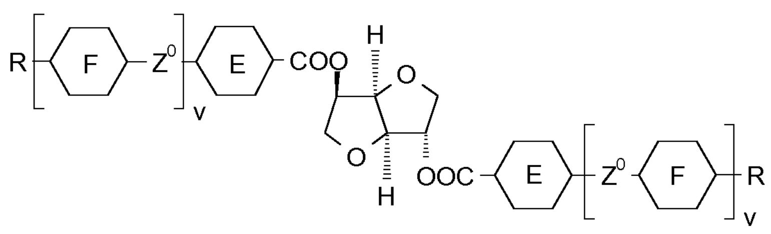

V

and formula VI

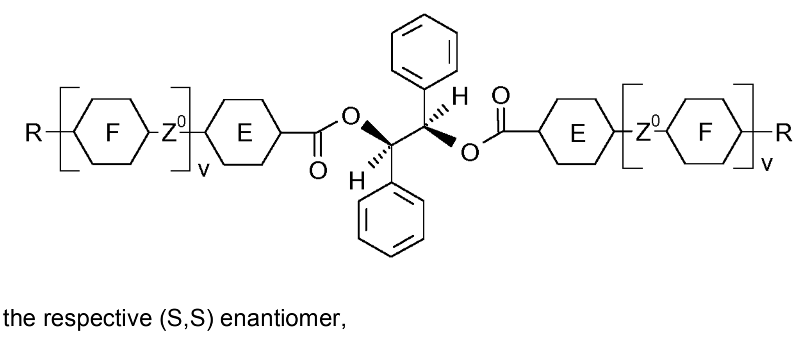

VI

including the respective (S,S) enantiomer,

wherein E and F are each independently 1,4-phenylene or trans-1,4-cyclohexylene, v is 0 or 1, $Z^0$ is -COO-, -OCO-, $-CH_2CH_2-$ or a single bond, and R is alkyl, alkoxy or alkanoyl with 1 to 12 C atoms.

The compounds of formula V and their synthesis are described in WO 98/00428. Especially preferred is the compound CD-1, as shown in table D below. The compounds of formula VI and their synthesis are described in GB 2,328,207.

Especially preferred are chiral dopants with a high helical twisting power (HTP), in particular those disclosed in WO 98/00428.

Further typically used chiral dopants are e.g. the commercially available R/S-5011, CD-1, R/S-811 and CB-15 (from Merck KGaA, Darmstadt, Germany).

The above mentioned chiral compounds R/S-5011 and CD-1 and the compounds of formula V and VI exhibit a very high helical twisting power (HTP) and are therefore particularly useful in the present media.

The liquid crystalline medium preferably comprises 1 to 5, more preferably 1 to 3, even more preferably 1 or 2 chiral dopants, preferably selected from the above formula V, in particular CD-1, and/or formula VI and/or R-5011 or S-5011. Most preferably the chiral dopant is R-5011, S-5011 or CD-1.

The amount of chiral compounds in the liquid crystalline medium is preferably from 1 to 20 % by weight of the total mixture, more preferably from 1 to 15 % by weight, even more preferably from 1 to 10 % by weight.

Further preferred are liquid crystalline media comprising one or more additives selected from the following formula VII

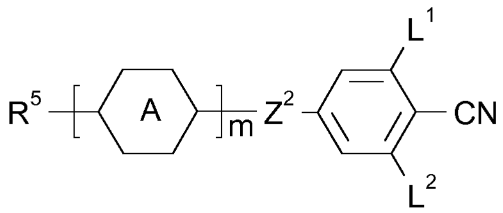

VII

wherein

| | |
|---|---|
| $R^5$ | is alkyl, alkoxy, alkenyl or alkenyloxy with up to 12 C atoms, |

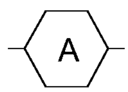

is

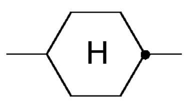 , 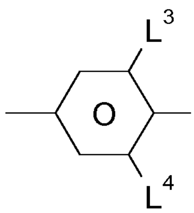 , 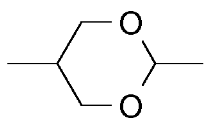 or 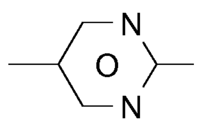 ,

| | |
|---|---|
| $L^1$ through $L^4$ | are each independently H or F, |
| $Z^2$ | is -COO-, $-CH_2CH_2-$ or a single bond, and |
| m | is 1 or 2. |

Particularly preferred compounds of formula VII are selected from the following formulae

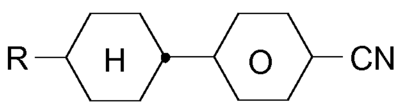

VIIa

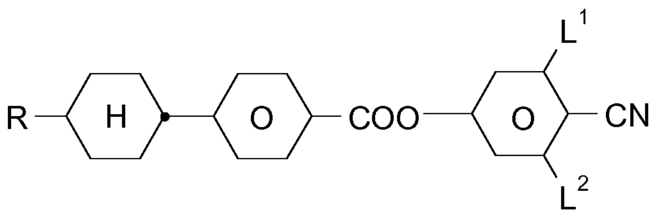

VIIb

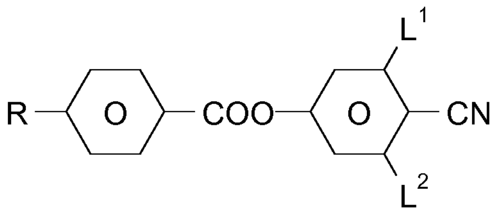

VIIc

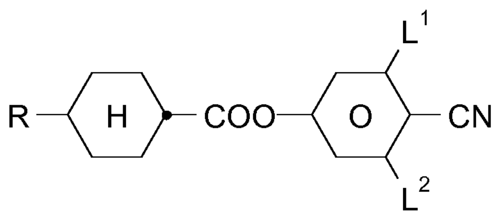

VIId

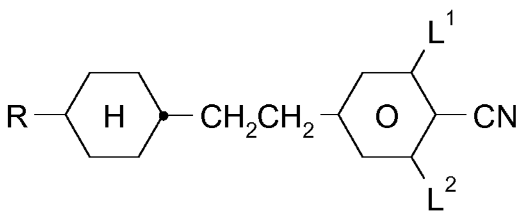

VIIe

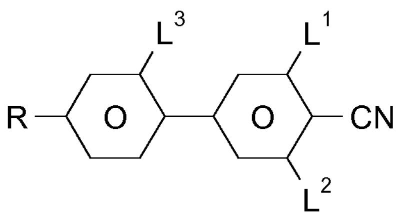

VIIf

wherein R has one of the meanings as $R^5$ above and $L^1$, $L^2$ and $L^3$ have the above meanings.

The liquid crystalline medium preferably comprises 1 to 5, more preferably 1 to 3, even more preferably 1 or 2 compounds of formula VII, preferably selected from the above formulae Vila to VIIf. The medium particularly preferably comprises one or more compounds selected from formulae VIIf.

The amount of suitable additives of formula VII in the liquid crystalline medium is preferably from 1 to 20 % by weight of the total mixture, more preferably from 1 to 15 % by weight, most preferably from 1 to 10 % by weight.

The liquid crystal media according to the present invention may contain further additives in usual concentrations. The total concentration of these further constituents can be in the range of 0.1 % to 10 %, preferably 0.1 % to 6 %, based on the total mixture. The concentrations of the individual compounds used each are preferably in the range of 0.1 % to 3 %. The concentration of these further additives is not taken into consideration for the values and ranges of the concentrations of the liquid crystal components and compounds of the liquid crystal media in this application. This also holds for the concentration of dichroic dyes used in the mixtures, which are not counted when the concentrations of the compounds respectively the components of the host medium are specified. The concentration of the respective additives is always given relative to the final doped mixture.

The liquid crystal media according to the present invention each consist of several compounds, preferably of 3 to 30, more preferably of 4 to 20 and most preferably of 4 to 16 compounds. These compounds are mixed in a conventional way. As a rule, the required amount of the compound used in the smaller amount is dissolved in the compound used in the larger amount. In case the temperature is above the clearing point of the compound used in the

higher concentration, it is particularly easy to observe completion of the process of dissolution. It is, however, also possible to prepare the media by other conventional ways, e.g. using so-called pre-mixtures, which can be e.g. homologous or eutectic mixtures of compounds or using so called multi-bottle systems, the constituents of which are ready-to-use mixtures themselves.

In an embodiment the liquid crystal medium is prepared by blending one or more compounds according to the invention, one or more chiral dopants and one or more further bimesogenic compounds.

Particularly preferred mixture concepts are indicated below. The acronyms used are explained in Table A.

The mixtures according to the invention preferably comprise

- one or more compounds according to the invention in a total concentration in the range from 1 to 50 %, more preferably from 5 to 40 %, most preferably from 10 to 30 % by weight of the total mixture
  and/or

- one or more compounds of formula II in a total concentration in the range from 10 to 95 %, more preferably from 15 to 90 %, most preferably 20 to 85 % by weight of the total mixture, preferably these compounds are selected from formulae II-1a to II-1e and II-3a to II-3b, more preferably comprising

  - N-PGI-ZI-n-Z-GP-N, particularly preferably N-PGI-ZI-7-Z-GP-N and/or N-PGI-ZI-9-Z-GP-N, preferably in concentrations > 5 %, in particular 10-30 %, based on the mixture as a whole,
    and/or

  - F-UIGI-ZI-n-Z-GU-F, particularly preferably F-UIGI-ZI-9-Z-GU-F, preferably in concentrations > 5 %, in particular 10-30 %, based on the mixture as a whole,
    and/or

  - F-PGI-O-n-O-PP-N, particularly preferably F-PGI-O-9-O-PP-N, preferably in concentrations of ≥ 1 %, in particular 1-20 %, based on the mixture as a whole,
    and/or

  - N-PP-O-n-O-PG-OT, particularly preferably N-PP-O-7-O-PG-OT, preferably in concentrations of ≥ 5 %, in particular 5-30 %, based on the mixture as a whole,
    and/or

  - N-PP-O-n-O-GU-F, particularly preferably N-PP-O-9-O-GU-F, preferably in concentrations of ≥ 1 %, in particular 1-20 %, based on the mixture as a whole,
    and/or

  - F-PGI-O-n-O-GP-F, particularly preferably F-PGI-O-7-O-GP-F and/or F-PGI-O-9-O-GP-F, preferably in concentrations of ≥ 1 %, in particular 1-20 %, based on the mixture as a whole,
    and/or

  - N-GIGIGI-n-GGG-N, in particular N-GIGIGI-9-GGG-N, preferably in concentrations > 5 %, in particular 10-30 %, based on the mixture as a whole,
    and/or

  - N-PGI-n-GP-N, particularly preferably N-PGI-9-GP-N, preferably in concentrations > 5 %, in particular 15-50 %, based on the mixture as a whole,
    and/or

- one or more suitable additives of formula VII in a total concentration in the range from 1 to 20 %, more preferably from 1 to 15 %, most preferably from 1 to 10 % by weight of the total mixture, wherein preferably these compounds are selected from formula VIIa to VIIf, more preferably comprising

  - PP-n-N, preferably in concentrations of ≥ 1 %, in particular 1-20 %, based on the mixture as a whole,
    and/or

- one or more chiral compounds, preferably in a total concentration in the range from 1 to 20 %, more preferably from 1 to 15 %, even more preferably from 1 to 10 % by weight of the total mixture, wherein preferably these compounds

are selected from formula V, VI, and R-5011 or S-5011, more preferably comprising

- R-5011, S-5011 or CD-1, preferably in a concentration of ≥ 1 %, in particular 1-20 %, based on the mixture as a whole.

The bimesogenic compounds according to the invention and the liquid crystalline media comprising them can be used in liquid crystal displays, such as STN, TN, AMD-TN, temperature compensation, guest-host, phase change or surface stabilized or polymer stabilized cholesteric texture (SSCT, PSCT) displays, in particular in flexoelectric devices, in active and passive optical elements like polarizers, compensators, reflectors, alignment layers, colour filters or holographic elements, in adhesives, synthetic resins with anisotropic mechanical properties, cosmetics, diagnostics, liquid crystal pigments, for decorative and security applications, in nonlinear optics, optical information storage or as chiral dopants.

The compounds according to the invention and the mixtures obtainable thereof are particularly useful for flexoelectric liquid crystal displays. A further aspect of the present invention thus is a liquid crystal device comprising a liquid crystalline medium which comprises two or more components, wherein one or more of the components is the bimesogenic compound according to the invention.

Preferably, the device is a flexoelectric device.

The inventive bimesogenic compounds according to the invention and the mixtures thereof can be aligned in their cholesteric phase into different states of orientation by methods that are known to the skilled person, such as surface treatment or electric fields. For example, they can be aligned into the planar (Grandjean) state, into the focal conic state or into the homeotropic state. Inventive compounds comprising polar groups, in particular with a strong dipole moment, can further be subjected to flexoelectric switching, and can thus favourably be used in electro-optical switches or liquid crystal displays.

The switching between different states of orientation according to a preferred embodiment of the present invention is exemplarily described below in detail for a sample comprising an inventive compound of formula I.

According to this preferred embodiment, the sample is placed into a cell comprising two plane-parallel glass plates coated with electrode layers, e.g. ITO layers, and aligned in its cholesteric phase into a planar state, wherein the axis of the cholesteric helix is oriented normal to the cell walls. This state is also known as Grandjean state, and the texture of the sample, which is observable e.g. in a polarization microscope, as Grandjean texture. Planar alignment can be achieved e.g. by surface treatment of the cell walls, for example by rubbing and/or coating with an alignment layer such as polyimide.

A Grandjean state with a high quality of alignment and only few defects can further be achieved by heating the sample to the isotropic phase, subsequently cooling to the chiral nematic phase at a temperature close to the chiral nematic-isotropic phase transition, and rubbing the cell.

In the planar state, the sample shows selective reflection of incident light, with the central wavelength of reflection depending on the helical pitch and the mean refractive index of the material.

When an electric field is applied to the electrodes, for example with a frequency from 10 Hz to 1 kHz and an amplitude of up to 12 $V_{rms}/\mu m$, the sample is being switched into a homeotropic state where the helix is unwound and the molecules are oriented parallel to the field, i.e. normal to the plane of the electrodes. In the homeotropic state, the sample is transmissive when viewed in normal daylight, and appears black when being put between crossed polarizers.

Upon reduction or removal of the electric field in the homeotropic state, the sample adopts a focal conic texture, where the molecules exhibit a helically twisted structure with the helical axis being oriented perpendicular to the field, i.e. parallel to the plane of the electrodes. A focal conic state can also be achieved by applying only a weak electric field to a sample in its planar state. In the focal conic state the sample is scattering when viewed in normal daylight and appears bright between crossed polarizers. A sample comprising an inventive compound in the different states of orientation exhibits different transmission of light. Therefore, the respective state of orientation, as well as its quality of alignment, can be examined by measuring the light transmission of the sample depending on the strength of the applied electric field. Thereby it is also possible to determine the electric field strength required to achieve specific states of orientation and transitions between these different states.

In a sample comprising an inventive compound, the above described focal conic state consists of many disordered birefringent small domains. By applying an electric field greater than the field for nucleation of the focal conic texture, preferably with additional shearing of the cell, a uniformly aligned texture is obtainable where the helical axis is parallel to the plane of the electrodes in large, well-aligned areas. In accordance with the literature on state of the art chiral nematic materials, such as P. Rudquist et al., Liq. Cryst. 23 (4), 503 (1997), this texture is also called uniformly lying helix (ULH) texture. This texture is suited to characterize the flexoelectric properties of the inventive compounds.

The sequence of textures typically observed in a sample comprising an inventive compound of formula I on a rubbed polyimide substrate upon increasing or decreasing the electric field is given below:

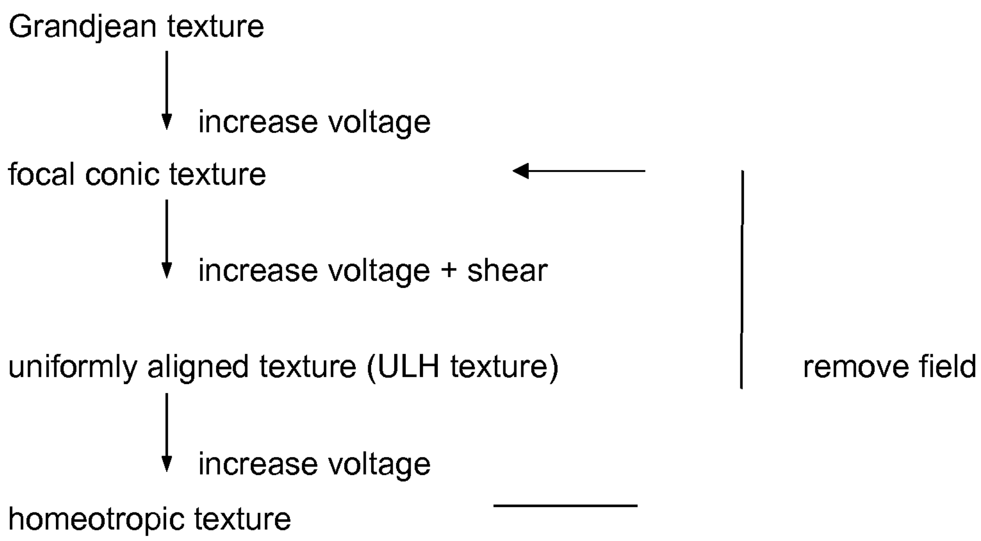


Starting from the ULH texture, the inventive flexoelectric compounds and mixtures can be subjected to flexoelectric switching by application of an electric field. This causes rotation of the optic axis of the material in the plane of the cell substrates, which leads to a change in transmission when placing the material between crossed polarizers. The flexoelectric switching of inventive materials is further described in detail in the background of the invention above and in the Examples.

It is also possible to obtain the ULH texture starting from the focal conic texture by applying an electric field with a high frequency, of for example 10 kHz, to the sample whilst cooling slowly from the isotropic phase into the cholesteric phase and shearing the cell. The field frequency may differ for different compounds.

The bimesogenic compounds according to the invention are particularly useful in flexoelectric liquid crystal displays as they can easily be aligned into macroscopically uniform orientation, and can lead to favourable values of the elastic constant $k_{11}$ and a high flexoelectric coefficient e in the liquid crystal medium.

The liquid crystal medium preferably exhibits a $k_{11} < 1x10^{-10}$ N, preferably $< 2x10^{-11}$ N, and a flexoelectric coefficient e $> 1x10^{-11}$ C/m, preferably $> 1x10^{-10}$ C/m.

Besides the use in flexoelectric devices, the inventive bimesogenic compounds as well as mixtures thereof are also suitable for other types of displays and other optical and electro-optical applications, such as optical compensation or polarizing films, colour filters, reflective cholesterics, optical rotatory power systems and optical information storage.

In a further embodiment a display cell wherein the cell walls exhibit hybrid alignment conditions is provided. The term "hybrid alignment" or orientation of a liquid crystal or mesogenic material in a display cell or between two substrates means that the mesogenic groups adjacent to the first cell wall or on the first substrate exhibit homeotropic orientation and the mesogenic groups adjacent to the second cell wall or on the second substrate exhibit planar orientation.

The term "homeotropic alignment" or orientation of a liquid crystal or mesogenic material in a display cell or on a substrate means that the mesogenic groups in the liquid crystal or mesogenic material are oriented substantially perpendicular to the plane of the cell or substrate, respectively.

The term "planar alignment" or orientation of a liquid crystal or mesogenic material in a display cell or on a substrate means that the mesogenic groups in the liquid crystal or mesogenic material are oriented substantially parallel to the plane of the cell or substrate, respectively.

A flexoelectric display according to a preferred embodiment of the present invention comprises two plane parallel substrates, preferably glass plates covered with a transparent conductive layer such as indium tin oxide (ITO) on their inner surfaces, and the flexoelectric liquid crystalline medium provided between the substrates, wherein one of the inner substrate surfaces exhibits homeotropic alignment conditions and the opposite inner substrate surface exhibits planar alignment conditions for the liquid crystalline medium.

Planar alignment can be achieved e.g. by means of an alignment layer, for example a layer of rubbed polyimide or sputtered $SiO_x$, which is applied on the substrate.

Alternatively, it is possible to directly rub the substrate, i.e. without applying an additional alignment layer. For example, rubbing can be achieved by means of a rubbing cloth, such as a velvet cloth, or with a flat bar coated with a rubbing cloth. In a preferred embodiment of the present invention rubbing is achieved by means of at least one rubbing roller, like e.g. a fast spinning roller that is brushing across the substrate, or by putting the substrate between at least two rollers, wherein in each case at least one of the rollers is optionally covered with a rubbing cloth. In another preferred embodiment of the present invention rubbing is achieved by wrapping the substrate at least partially at a defined angle

around a roller that is preferably coated with a rubbing cloth.

Homeotropic alignment can be achieved e.g. by means of an alignment layer coated on top of the substrate. Suitable aligning agents used on glass substrates are for example alkyltrichlorosilane or lecithine, whereas for plastic substrates thin layers of lecithine, silica or high tilt polyimide orientation films as aligning agents may be used. In a preferred embodiment of the invention a silica coated plastic film is used as a substrate.

Further suitable methods to achieve planar or homeotropic alignment are described for example in J. Cognard, Mol.Cryst.Liq.Cryst. 78, Supplement 1, 1-77 (1981).

By using a display cell with hybrid alignment conditions, a very high switching angle of flexoelectric switching, fast response times and a good contrast can be obtainable.

The flexoelectric display according to the present invention may also comprise plastic substrates instead of glass substrates. Plastic film substrates are particularly suitable for rubbing treatment by rubbing rollers as described above.

When added to a nematic liquid crystalline mixture the compounds of formula I may produce a phase below the nematic. Accordingly, the bimesogenic compounds according to the present invention can allow the second nematic phase to be induced in nematic mixtures that do not show evidence of this phase normally. Furthermore, varying the amounts of compounds of formula I may allow the phase behaviour of the second nematic to be tailored to the required temperature.

Therefore, in an embodiment a liquid crystal medium is provided comprising one or more compounds of formula I and exhibiting a second nematic phase. These obtainable mixtures are particularly useful for flexoelectric liquid crystal display.

The total concentration of all compounds in the media according to this application is 100 %.

In the foregoing and in the following examples, unless otherwise indicated, all temperatures are set forth uncorrected in degrees Celsius and all parts and percentages are by weight.

The following abbreviations are used to illustrate the liquid crystalline phase behaviour of the compounds: K = crystalline; N = nematic; N2 = second nematic; S or Sm = smectic; Ch = cholesteric; I = isotropic; $T_g$ = glass transition temperature. The numbers between the symbols indicate the phase transition temperatures in °C.

In the present invention and especially in the following examples, the structures of the liquid crystal compounds are represented by abbreviations, which are also called "acronyms". The transformation of the abbreviations into the corresponding structures is straight-forward according to the following three tables A to C.

All groups $C_nH_{2n+1}$, $C_mH_{2m+1}$, and $C_lH_{2l+1}$ are preferably straight chain alkyl groups with n, m and l C atoms, respectively, all groups $C_nH_{2n}$, $C_mH_{2m}$ and $C_lH_{2l}$ are preferably $(CH_2)_n$, $(CH_2)_m$ and $(CH_2)_l$, respectively and -CH=CH- preferably is *trans*- respectively *E*-vinylene.

Table A lists the symbols used for the ring elements, table B those for the linking groups and table C those for the symbols for the left hand and the right hand end (terminal) groups of the molecules.

Table D lists exemplary molecular structures together with their respective codes.

**Table A: Ring Elements**

| | | | |
|---|---|---|---|
| **C** | 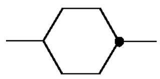 | **P** | 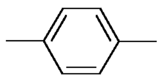 |
| **D** | 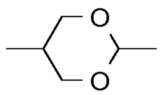 | **DI** | 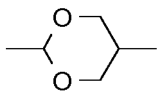 |
| **A** | 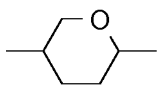 | **AI** | 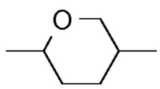 |
| **G** | 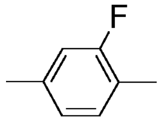 | **GI** | 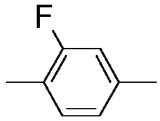 |
| **G(Cl)** | 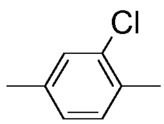 | **GI(Cl)** | 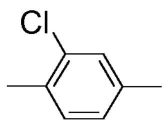 |

(continued)

| | | | |
|---|---|---|---|
| **G(1)** | 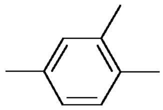 | **GI(1)** | 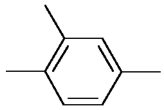 |
| **U** | 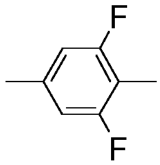 | **UI** | 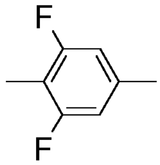 |
| **Y** | 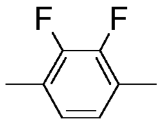 | | |
| **M** | 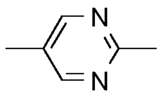 | **MI** | 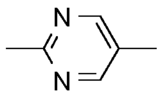 |
| **N** | 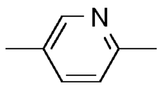 | **NI** | 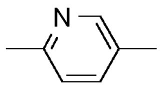 |
| **np** | 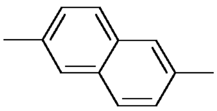 | | |
| **n3f** | 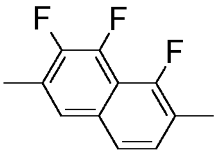 | **n3fl** | 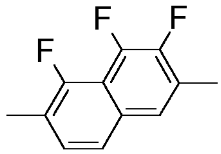 |
| **th** | 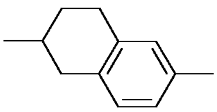 | **thI** | 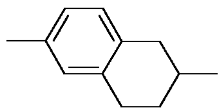 |
| **th2f** | 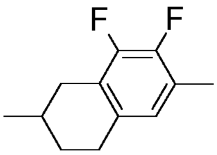 | **th2fl** | 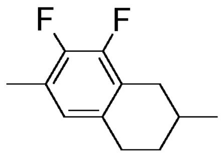 |
| **o2f** | 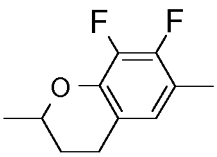 | **o2fl** | 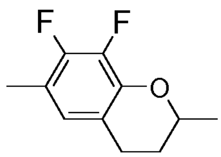 |
| **dh** | 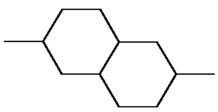 | | |
| **K** | 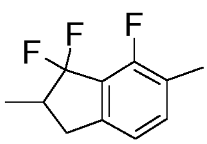 | **KI** | 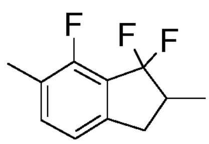 |
| **L** | 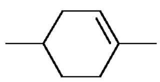 | **LI** | 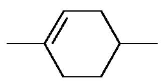 |

(continued)

| | | | |
|---|---|---|---|
| **F** | 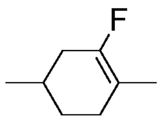 | **FI** | 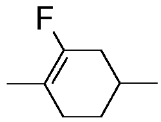 |

**Table B: Linking Groups**

| | | | |
|---|---|---|---|
| **n** | $(-CH_2-)n$ | "n" is an integer except 0 and 2 | |
| **E** | $-CH_2-CH_2-$ | | |
| **V** | -CH=CH- | | |
| **T** | -C≡C- | | |
| **W** | $-CF_2-CF_2-$ | | |
| **B** | -CF=CF- | | |
| **Z** | -CO-O- | **ZI** | -O-CO- |
| **X** | -CF=CH- | **XI** | -CH=CF- |
| **1O** | $-CH_2-O-$ | **O1** | $-O-CH_2-$ |
| **Q** | $-CF_2-O-$ | **QI** | $-O-CF_2-$ |

**Table C: End Groups**

| **Left hand side, used alone or in combination with others** | | **Right hand side, used alone or in combination with others** | |
|---|---|---|---|
| **-n-** | $C_nH_{2n+1}-$ | **-n** | $-C_nH_{2n+1}$ |
| **m-** | $C_mH_{2m+1}$-(for bimesogenic compounds) | **-k** | $-C_kH_{2k+1}$ (for bimesogenic compounds) |
| **-nO-** | $C_nH_{2n+1}-O-$ | **-nO** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH-C_nH_{2n}-$ | **-Vn** | $-CH=CH-C_nH_{2n+1}$ |
| **-nVm-** | $CnH_{2n+1}-CH=CH-CmH_{2m}-$ | **-nVm** | $-C_nH_{2n}-C_H=CH-C_mH_{2m+1}$ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | $CFH_2-$ | **-M** | $-CFH_2$ |
| **-D-** | $CF_2H-$ | **-D** | $-CF_2H$ |
| **-T-** | $CF_3-$ | **-T** | $-CF_3$ |
| **-MO-** | $CFH_2O-$ | **-OM** | $-OCFH_2$ |
| **-DO-** | $CF_2HO-$ | **-OD** | $-OCF_2H$ |
| **-TO-** | $CF_3O-$ | **-OT** | $-OCF_3$ |
| **-A-** | H-C≡C- | **-A** | -C≡C-H |
| **-nA-** | $C_nH_{2n+1}$-C≡C- | **-An** | -C≡C-$C_nH_{2n+1}$ |
| **-NA-** | N≡C-C≡C- | **-AN** | -C≡C-C≡N |

| **Left hand side, used in combination with others only** | | **Right hand side, used in combination with others only** | |
|---|---|---|---|
| **-...n...-** | $(-CH_2-)_n$ | **-...n...** | $(-CH_2-)_n$ |
| **-...M...-** | -CFH- | **-...M...** | -CFH- |
| **-...D...-** | $-CF_2-$ | **-...D...** | $-CF_2-$ |
| **-...V...-** | -CH=CH- | **-...V...** | -CH=CH- |

(continued)

| Left hand side, used in combination with others only | | Right hand side, used in combination with others only | |
|---|---|---|---|
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

wherein n, m and k each are integers and three points "..." indicate a space for other symbols of this table.

Preferably, the liquid crystalline media according to the present invention comprise, besides the compound(s) of formula I, one or more compounds selected from the group of compounds of the formulae of the following table.

**Table D**

In this table n is an integer selected from 3 and 5 to 15, preferably from 3, 5, 7 and 9, unless explicitly defined otherwise, and m and k are independently of each other an integer from 1 to 9, preferably from 1 to 7, more preferably from 3 to 5.

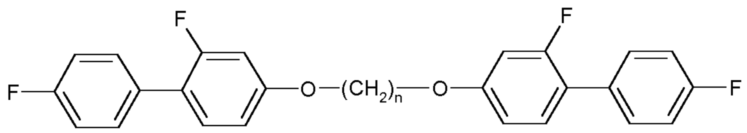

**F-PGI-O-n-O-GP-F**

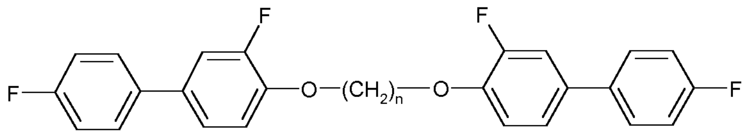

**F-PG-O-n-O-GIP-F**

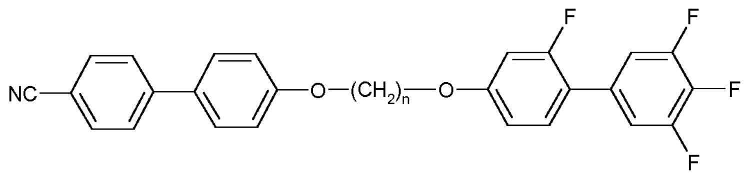

**N-PP-O-n-O-GU-F**

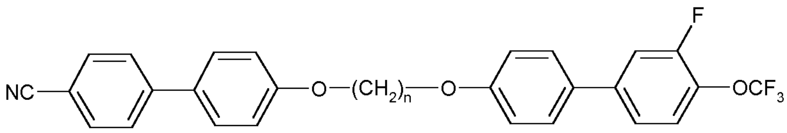

**N-PP-O-n-O-PG-OT**

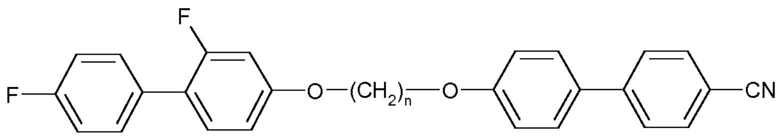

**F-PGI-O-n-O-PP-N**

(continued)

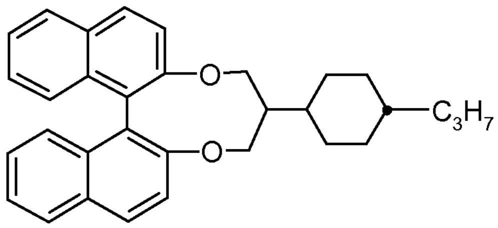

**R-5011** respectively **S-5011**

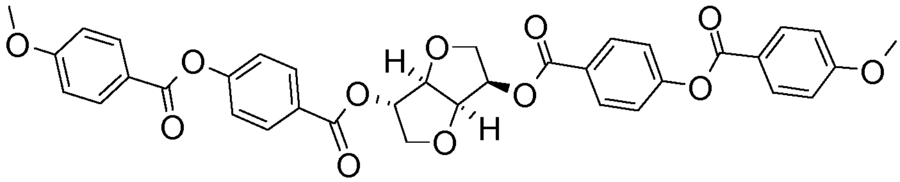

**CD-1**

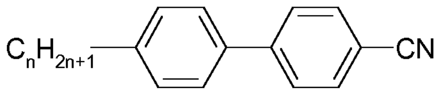

**PP-n-N** (n ∈ {2; 3; 4; 5; 6; 7})

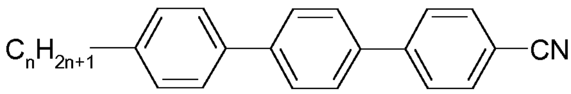

**PPP-n-N** (n ∈ {2; 3; 4; 5; 6; 7})

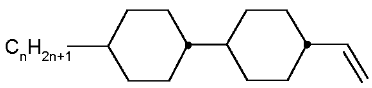

**CC-n-V** (n ∈ {2; 3; 4; 5; 7})

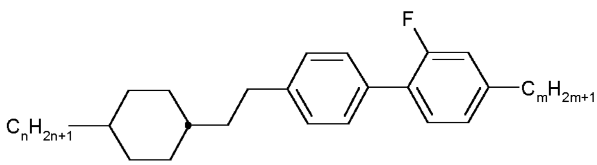

**CEPGI-n-m** (n ∈ {2; 3; 4; 5}; m ∈ {2; 3; 4; 5})

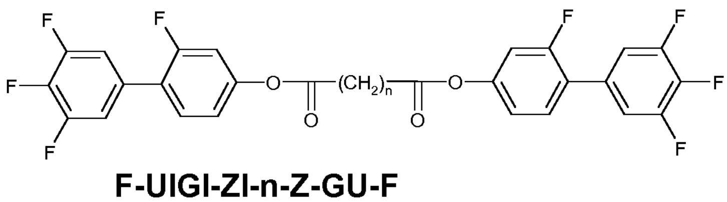

**F-UIGI-ZI-n-Z-GU-F**

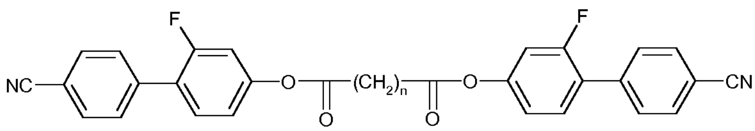

**N-PGI-ZI-n-Z-GP-N**

(continued)

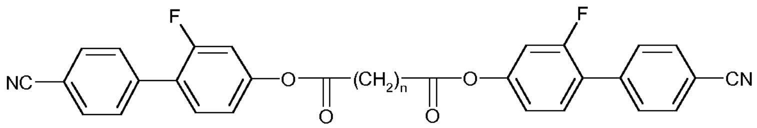

F-PGI-ZI-n-Z-GP-F

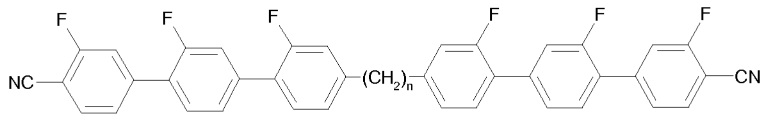

N-GIGIGI-n-GGG-N

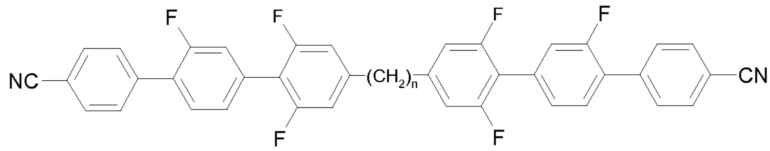

N-PGIUI-n-UGP-N

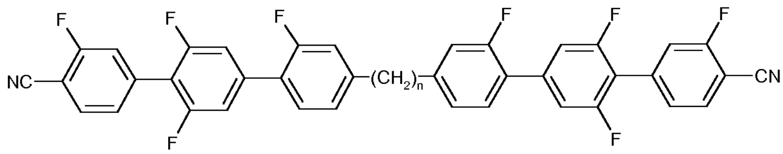

N-GIUIGI-n-GUG-N

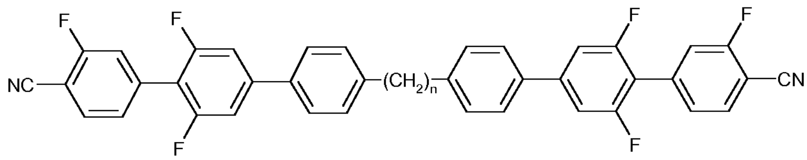

N-GIUIP-n-PUG-N

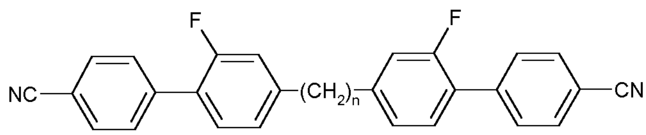

N-PGI-n-GP-N

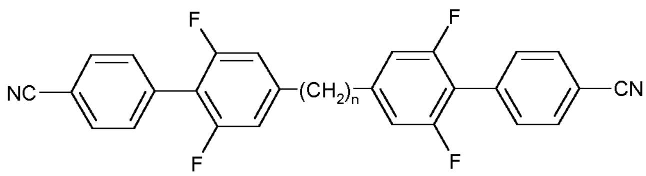

N-PUI-n-UP-N

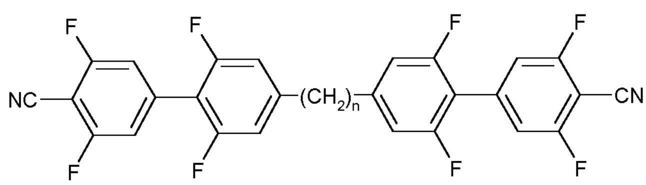

N-UIUI-n-UU-N

(continued)

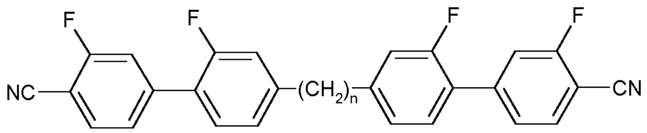

**N-GIGI-n-GG-N**

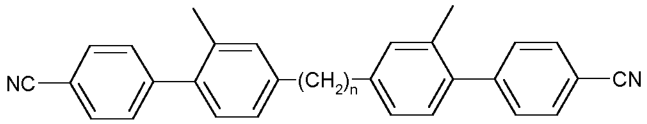

**N-PGI(1)-n-G(1)P-N**

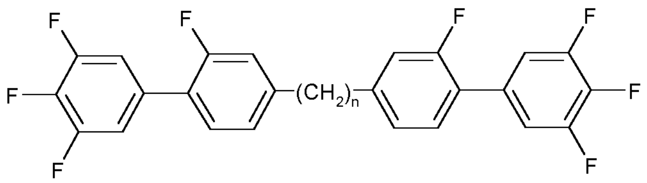

**F-UIGI-n-GU-F**

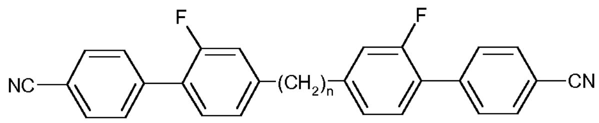

**N-PGI-n-GP-N**

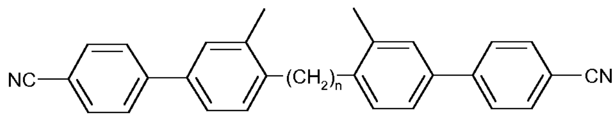

**N-PG(1)-n-GI(1)P-N**

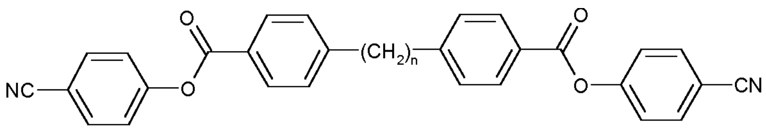

**N-PZIP-n-PZP-N**

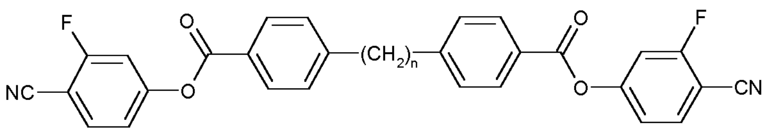

**N-GIZIP-n-PZG-N**

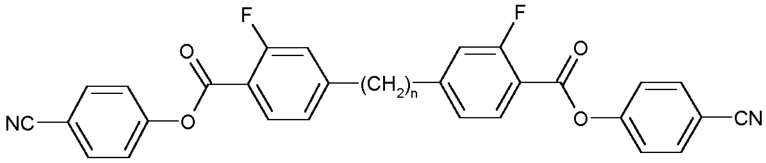

**N-PZIGI-n-GZP-N**

(continued)

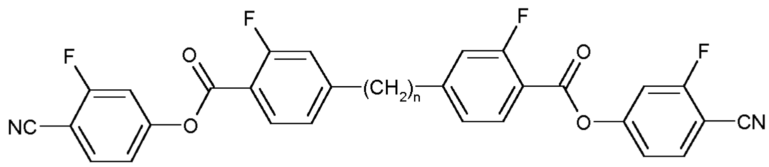

**N-GIZIGI-n-GZG-N**

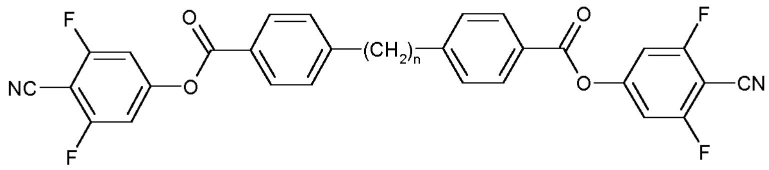

**N-UIZIP-n-PZU-N**

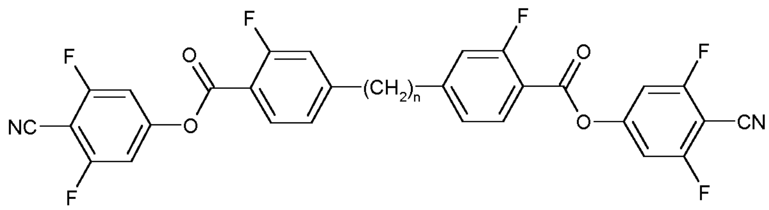

**N-UIZIGI-n-GZU-N**

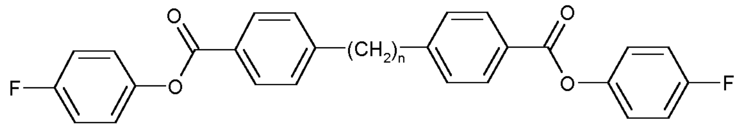

**F-PZIP-n-PZP-F**

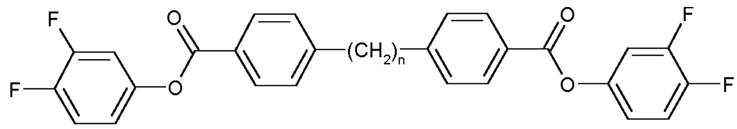

**F-GIZIP-n-PZG-F**

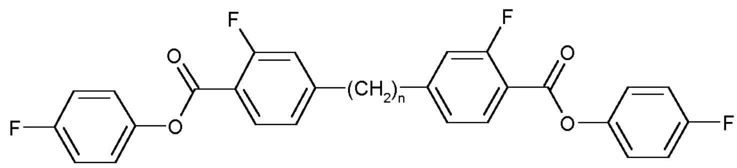

**F-PZIGI-n-GZP-F**

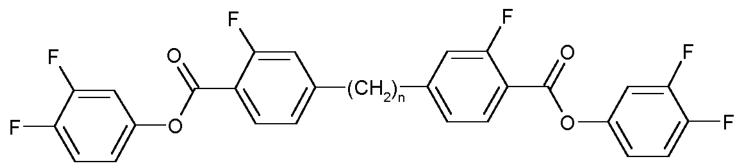

**F-GIZIGI-n-GZG-F**

(continued)

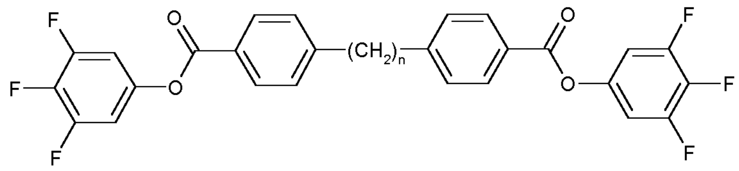

**F-UIZIP-n-PZU-F**

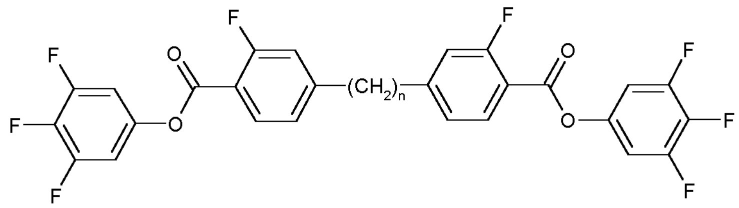

**F-UIZIGI-n-GZU-F**

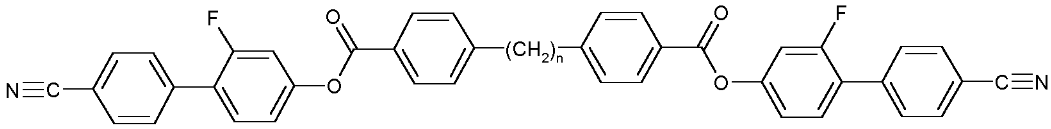

**N-PGIZIP-n-PZGP-N**

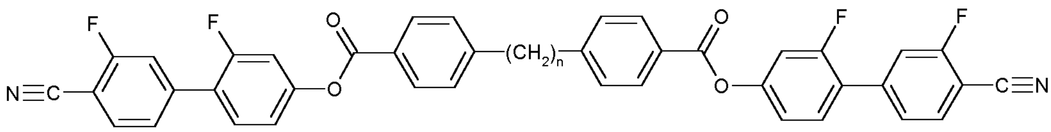

**N-GIGIZIP-n-PZGG-N**

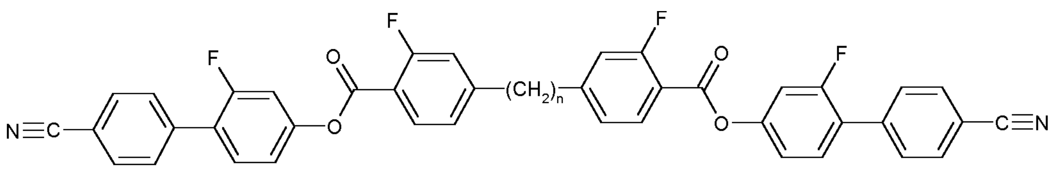

**N-PGIZIGI-n-GZGP-N**

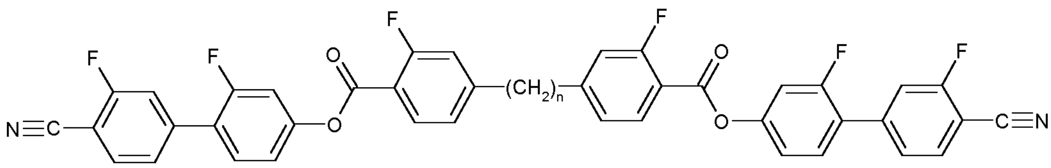

**N-GIGIZIGI-n-GZGG-N**

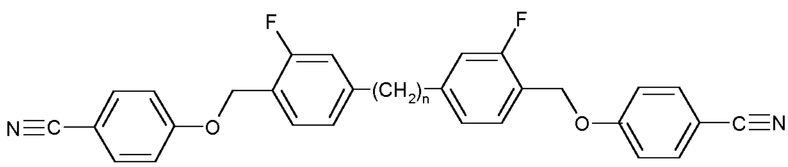

**N-PO1GI-n-GO1P-N**

(continued)

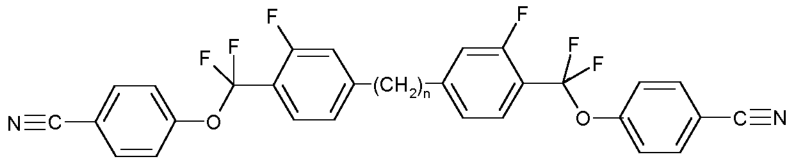

**N-PQIGI-n-GQP-N**

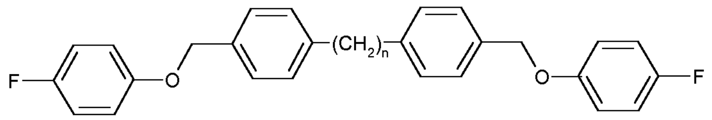

**F-PO1P-n-PO1P-N (= N-PO1P-n-PO1P-F)**

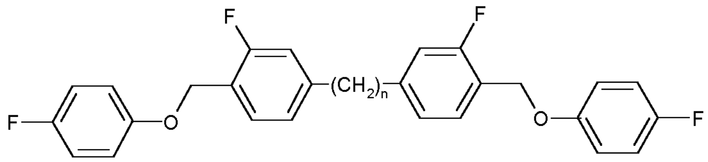

**F-PO1GI-n-GO1P-N (= N-PO1GI-n-GO1P-F)**

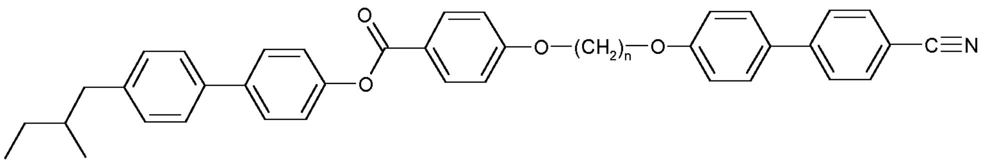

**2(CHCH3)1-PPZIP-O-n-O-PP-N**

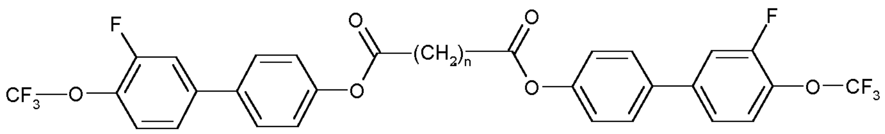

**TO-GIP-ZI-n-Z-PG-OT**

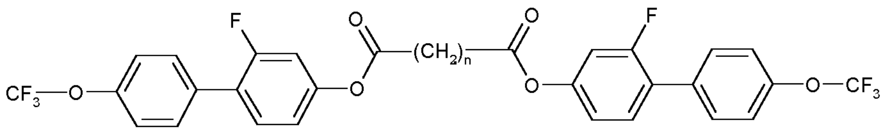

**TO-PGI-ZI-n-Z-GP-OT**

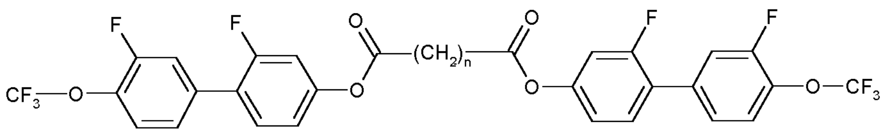

**TO-GIGI-ZI-n-Z-GG-OT**

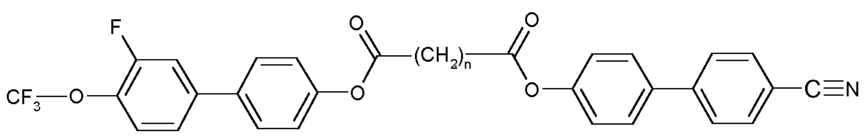

**TO-GIP-ZI-n-Z-PP-N**

(continued)

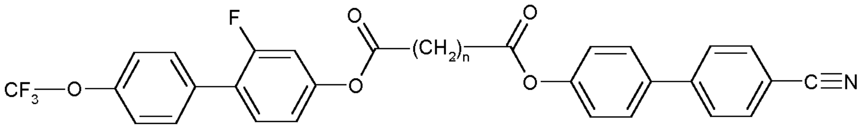

**TO-PGI-ZI-n-Z-PP-N**

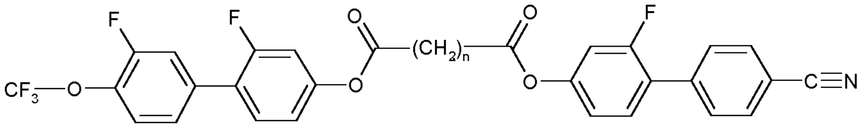

**TO-GIGI-ZI-n-Z-GP-N**

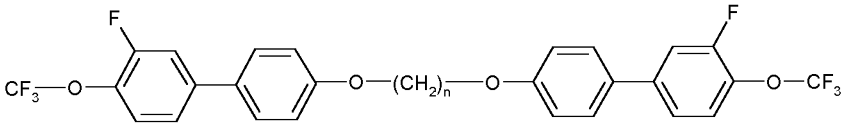

**TO-GIP-O-n-O-PG-OT**

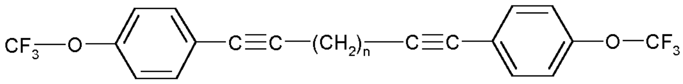

**TO-P-T-n-T-P-OT**

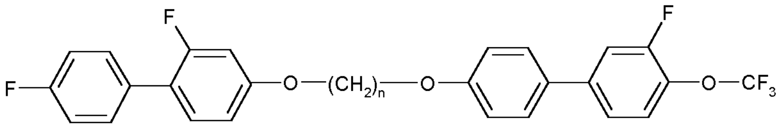

**F-PGI-O-n-O-PG-OT**

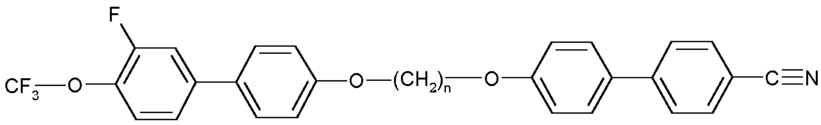

**TO-GIP-O-n-O-PP-N**

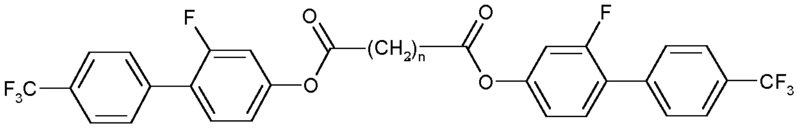

**T-PGI-ZI-n-Z-GP-T**

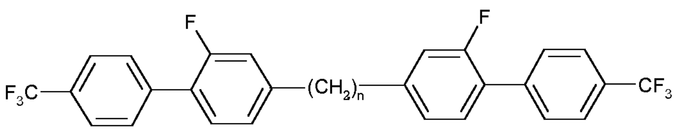

**T-PGI-n-GP-T**

(continued)

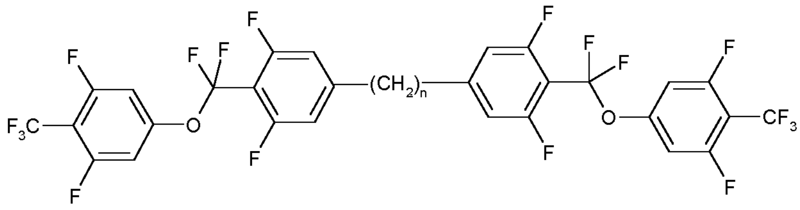

**T-UIQIUI-n-UQU-T**

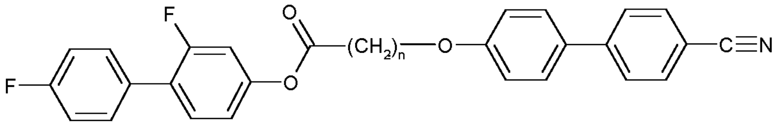

**F-PGI-ZI-n-O-PP-N**

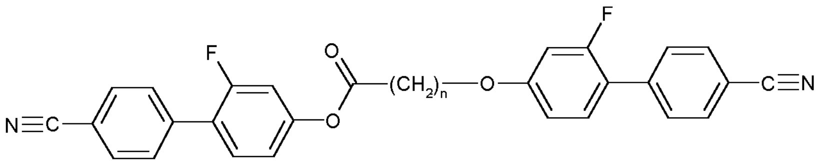

**N-PGI-ZI-n-O-GP-N**

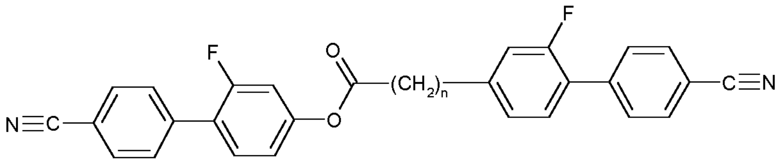

**N-PGI-ZI-n-GP-N**

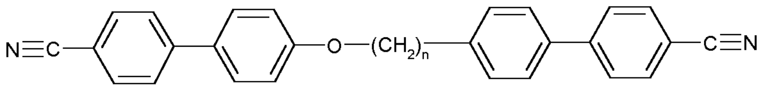

**N-PP-O-n-PP-N**

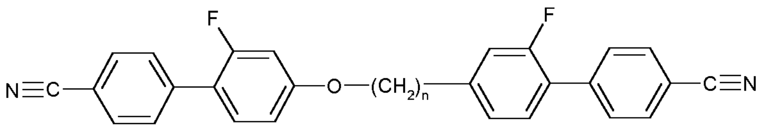

**N-PGI-O-n-GP-N**

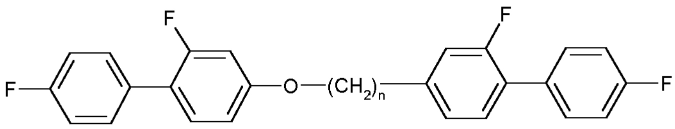

**F-PGI-O-n-GP-F**

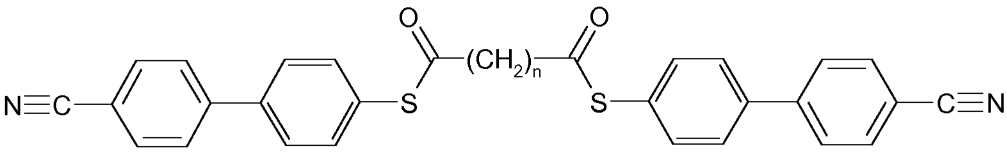

**N-PP-SCO-n-COS-PP-N**

(continued)

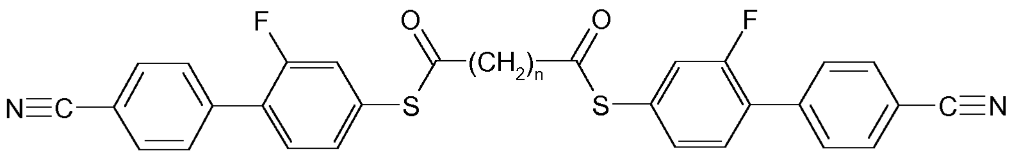

**N-PGI-SCO-n-COS-GP-N**

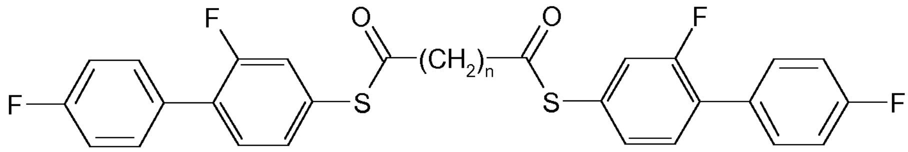

**F-PGI-SCO-n-COS-GP-F**

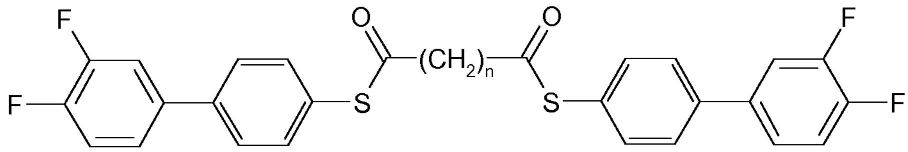

**F-GIP-SCO-n-COS-PG-F**

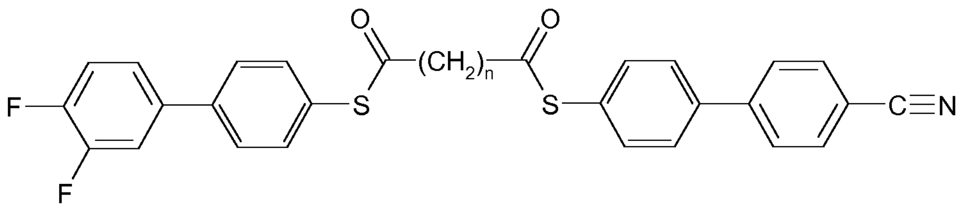

**F-GIP-SCO-n-COS-PP-N**

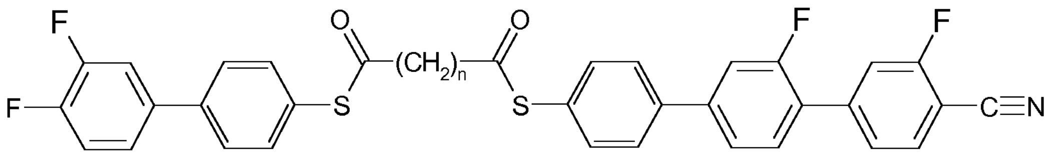

**F-GIP-SCO-n-COS-PGG-N**

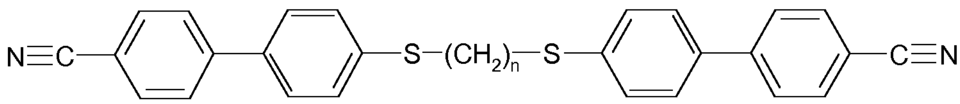

**N-PP-S-9-S-PP-N**

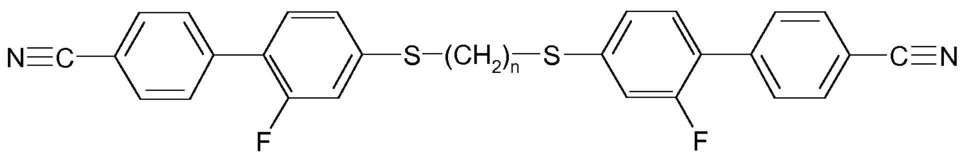

**N-PGI-S-n-S-GP-N**

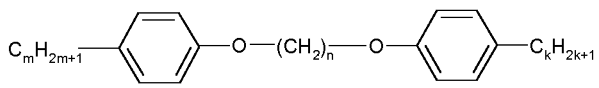

**m-P-O-n-O-P-k**

(continued)

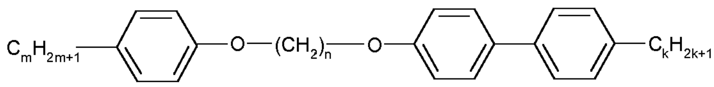

**m-P-O-n-O-PP-k**

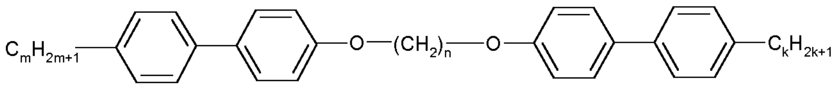

**m-PP-O-n-O-PP-k**

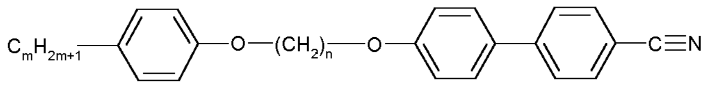

**m-P-O-n-O-PP-N**

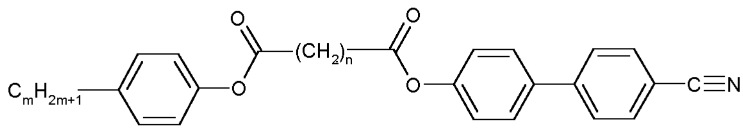

**m-P-ZI-n-Z-PP-N**

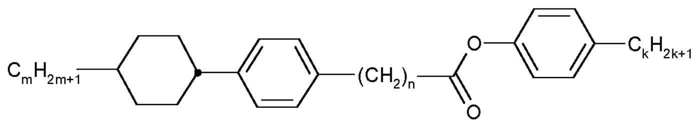

**m-CP-n-Z-P-k**

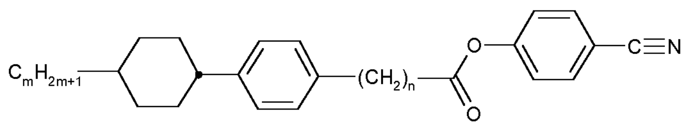

**m-CP-n-Z-P-N**

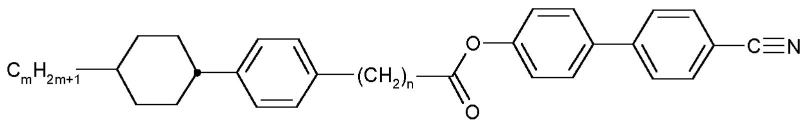

**m-CP-n-Z-PP-N**

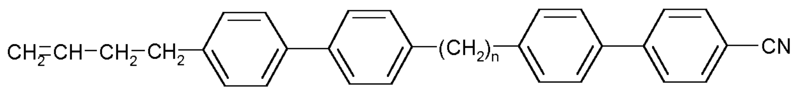

**V2-PP-n-PP-N**

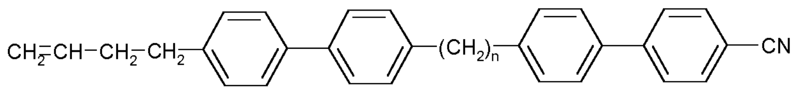

**V2-PP-n-PP-N**

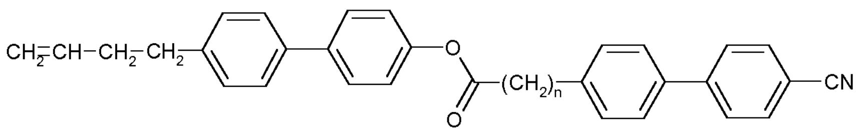

**V2-PP-ZI-n-PP-N**

(continued)

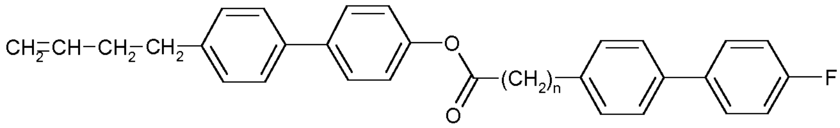

**V2-PP-ZI-n-PP-F**

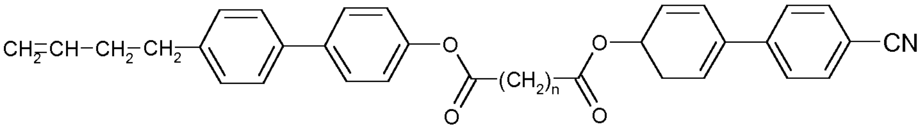

**V2-PP-ZI-n-Z-PP-N**

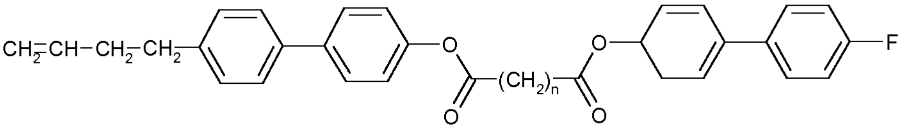

**V2-PP-ZI-n-Z-PP-F**

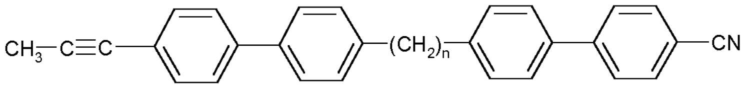

**1A-PP-n-PP-N**

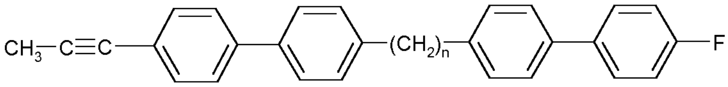

**1A-PP-n-PP-F**

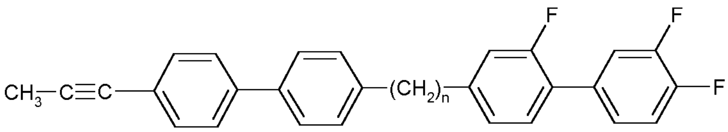

**1A-PP-n-GG-F**

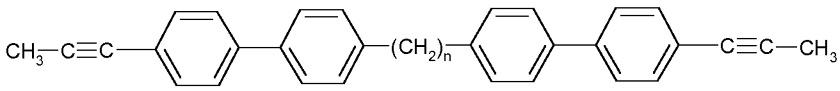

**1A-PP-n-PP-A1**

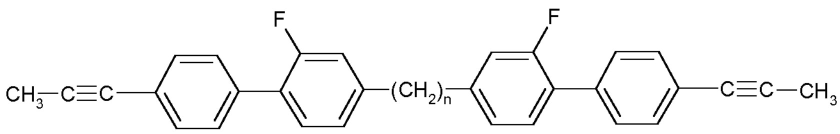

**1A-PGI-n-GPP-A1**

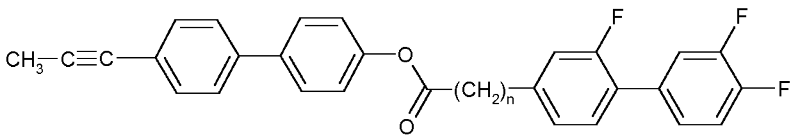

**1A-PP-ZI-n-GG-F**

The following examples are merely illustrative of the present invention and they should not be considered as limiting the scope of the invention in any way. The examples and modifications or other equivalents thereof will become

apparent to those skilled in the art in the light of the present disclosure.

Compound and Synthesis Examples

Synthesis Example 1

Preparation of

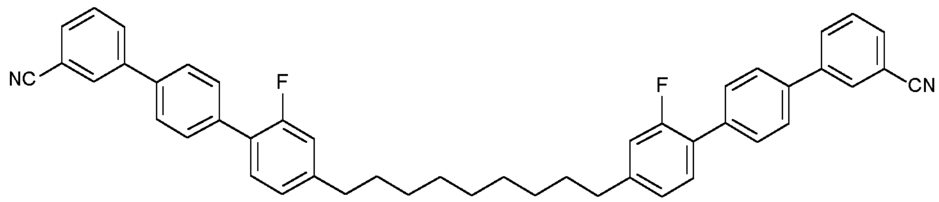

The compound of interest is prepared according to the following scheme.

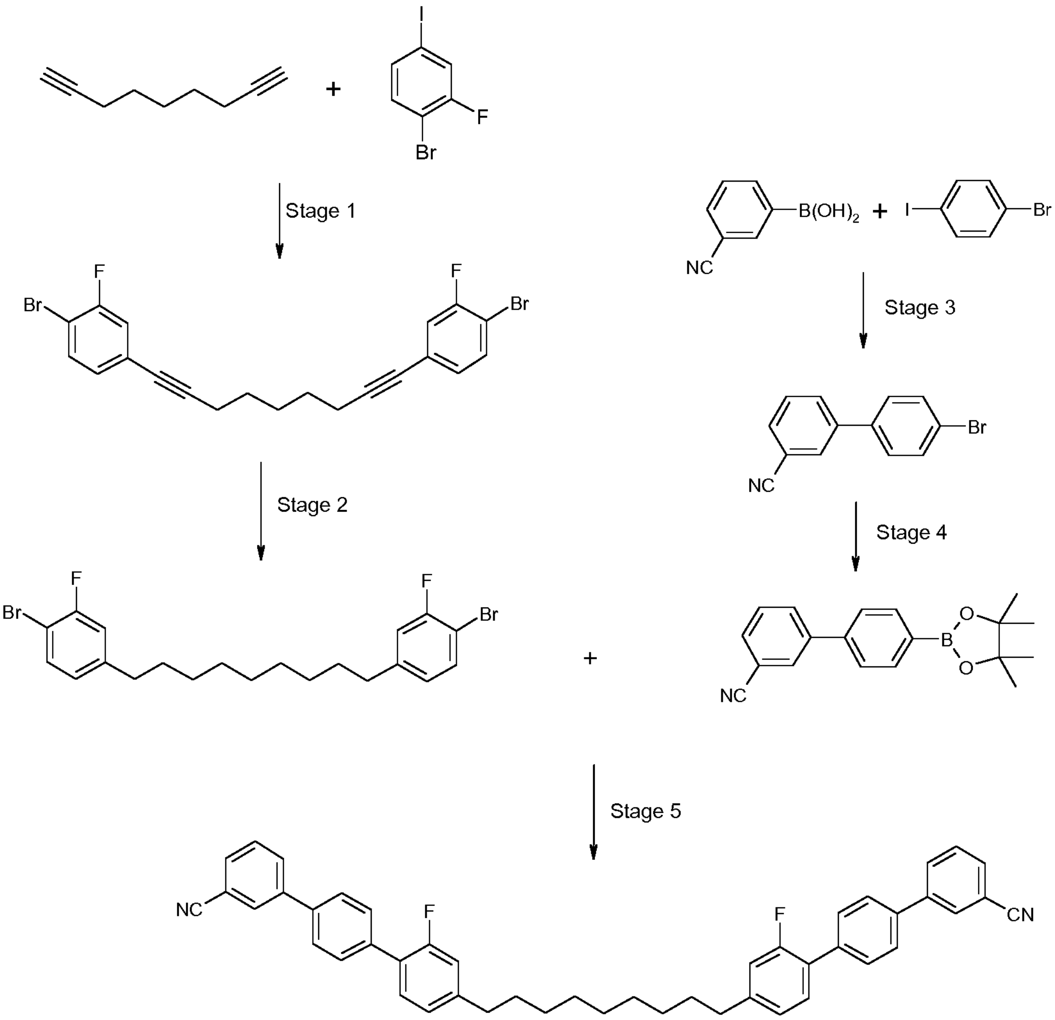


Stage 1

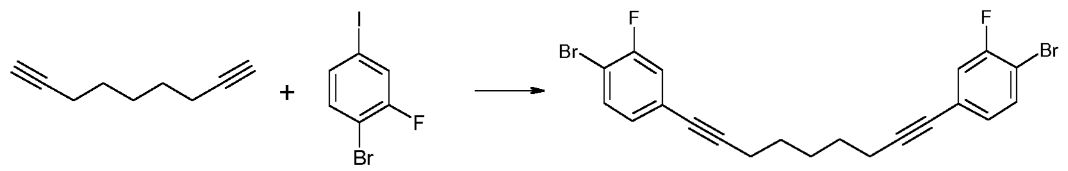

1-bromo-3-fluoroiodobenzene (27.5g, 0.092mol) is added to a round bottom flask containing tetrahydrofuran (30mL). Diisopropylamine (30 mL) is added and the reaction is placed in an ultrasonic bath for 10 minutes. Catalysts, bis(triphenylphosphine)palladium(II) dichloride (0.9g, 1.28mmol) and copper (I) iodide (0.2g, 1.05mmol) are added and the reaction is cooled in a water bath to 20°C. 1,8-Nonadiyne (5.0g, 0.041mol) is slowly added to the reaction and stirred for a further 20 hours. The reaction is cooled and filtered under vacuum to remove precipitates. The filtrate is acidified with dilute hydrochloric acid and extracted with diethyl ether. The organic material is washed with water before concentrating to afford the product as a black solid. Pure product is obtained after column chromatography, eluting with dichloromethane/petroleum ether.

Stage 2

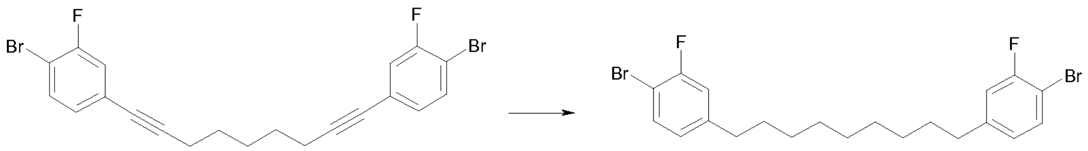

Product of stage 1 (21.5g, 0.040mol) is dissolved in tetrahydrofuran (600 mL) and passed through a Thalesnano hydrogenator. Conditions of 70 bar pressure and 60°C are used to produce the product as pale coloured solid.

Stage 3

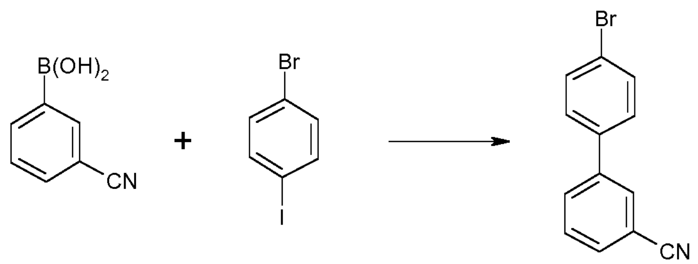

1-Bromo-4-iodo-benzene (17.33 g; 61.25 mmol), (3-cyanophenyl)boronic acid (9.00 g; 61.25 mmol) are charged in a flask containing 400 mL tetrahyrofuran under nitrogen. Potassium carbonate (12.70 g; 91.87 mmol) in 20 mL water is added. The system is degassed and bis(triphenylphosphine)palladium(II) dichloride (0.90 g; 1.28 mmol; 0.02 eq.) is added. The reaction mixture is stirred at 80 °C overnight. Water (50 mL) and 20 mL dilute hydrochloric acid are added. Organic phase is separated and aqueous phase is extracted with ethyl acetate (3X 100 mL). Organic phases are combined, dried over magnesium sulphate and evaporated under reduced pressure. Purification by plug of silica eluted by dichloromethane followed by crystallisation from IMS gives pure product.

Stage 4

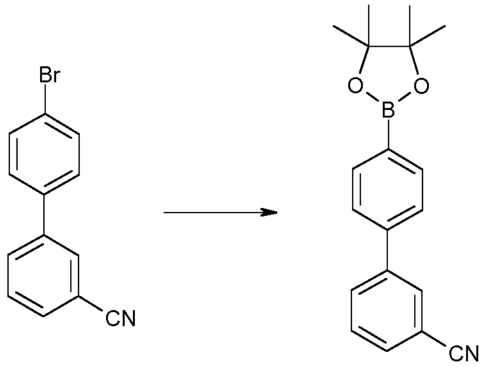

4'-Bromo-biphenyl-3-carbonitrile (10.50 g; 40.68 mmol), 4,4,5,5,4',4',5',5'-octamethyl-[2,2']bi[[1,3,2]dioxaborolanyl] (11.36 g; 44.75 mmol) and potassium acetate (5.94 g; 60.65 mmol) are added to 200 mL anhydrous 1,4-dioxane. The system is degassed, dichlorobis(tricyclohexylphosphine)palladium (II) (1.50 g; 2.03 mmol) is added and the reaction mixture is stirred at 80°C overnight. Water (30 mL) is added and organic phase is separated. Aqueous phase is extracted three times with ethyl acetate. Organic phases are combined and washed with brine, then twice with water, dried over magnesium sulphate and concentrated. Purification by column chromatography over silica gel eluted with petroleum ether/dichloromethane (5:1 ratio), followed by recrystallisation from petroleum ether/IMS gives pure product as white solid.

Stage 5

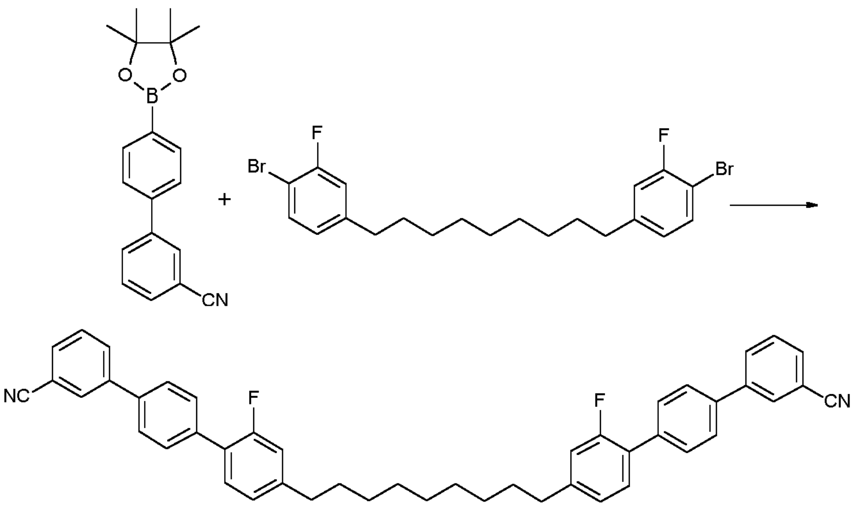

To a solution of 4'-(4,4,5,5-tetramethyl-[1,3,2]dioxaborolan-2-yl)-biphenyl-3-carbonitrile (9.65 g; 31.63 mmol) and 1-bromo-4-[9-(4-bromo-3-fluorophenyl)nonyl]-2-fluoro-benzene (7.50 g; 15.82 mmol) in 100 mL tetrahydrofuran, sodium metaborate octahydrate (6.83 g; 24.78 mmol) in 20 mL water is added. The system is purged with nitrogen and bis(triphenylphosphine)palladium(II) dichloride (0.28 g; 0.40 mmol) is added and the reaction mixture is stirred at 80 °C overnight. Water (20 mL) is added and organic phase is separated. Aqueous phase is extracted with ethyl acetate. Organic phases are combined, washed with dilute hydrochloric acid followed by water and evaporated under reduced pressure. Crystallisation from dichloromethane/acetonitrile gives pure product.
Phase sequence: K 124 I, e/K = 1.96 $V^{-1}$.

Synthesis Example 2

Synthesis Example 2a (not according to the invention)

Preparation of

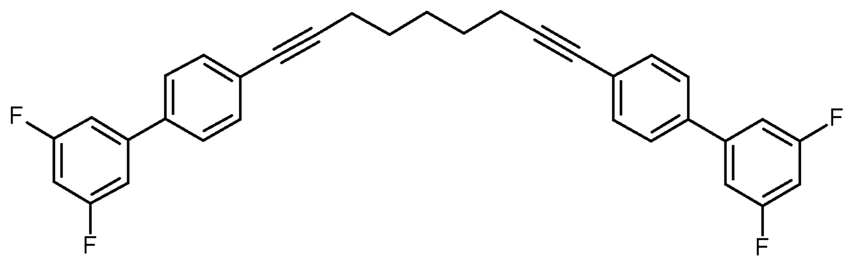

The compound of interest is prepared according to the following scheme.

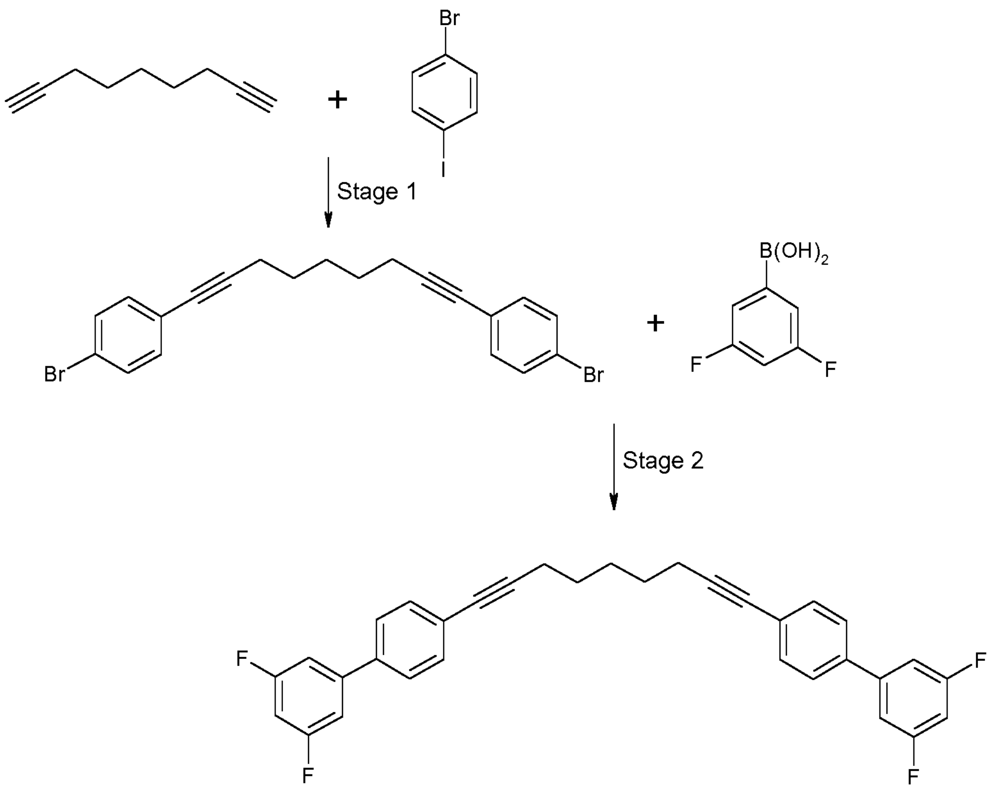


Stage 1

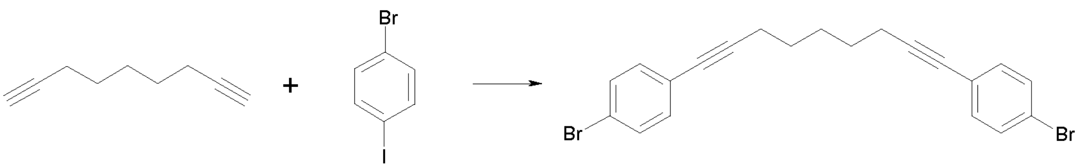

To a solution of 1-bromo-4-iodo-benzene (25.00 g; 88.37 mmol) in 80 mL tetrahydrofuran, bis(triphenylphosphine)palladium(II) dichloride (0.90 g; 1.28 mmol), copper(I) iodide (0.20 g; 1.05 mmol) and diisopropylamine (14.00 ml; 99.61 mmol) are added. The reaction mixture is purged with nitrogen. Then, nona-1,8-diyne (5.00 g; 41.60 mmol) in 20 mL tetrahydrofuran is added slowly. The reaction is stirred overnight at room temperature. Reaction mixture is filtered and the solid washed with tetrahydrofuran. The solvent is removed under reduced pressure. Column chromatography of crude on silica gel eluted with dichloromethane gives product as yellow solid.

Stage 2

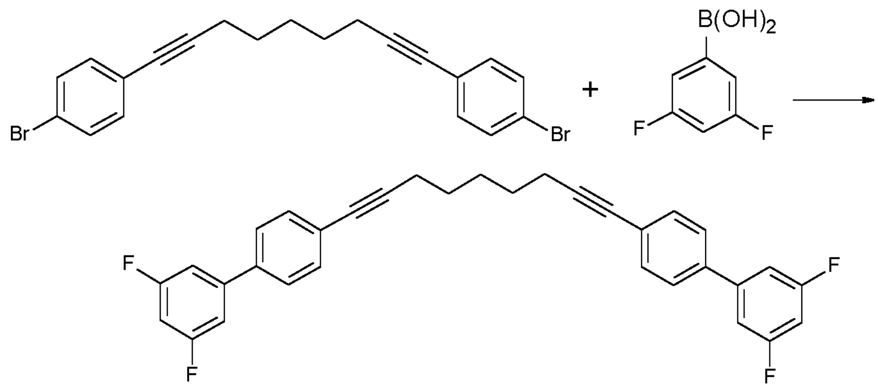

1-bromo-4-[9-(4-bromophenyl)nona-1,8-diynyl]benzene (30.00 g; 69.74 mmol), (3,5-difluorophenyl)boronic acid (24.23 g; 153.43 mmol), bis(triphenylphosphine)palladium(II) dichloride (2.45 g; 3.49 mmol) are charged into a flask containing 600 mL tetrahydrofuran. Aqueous solution of sodium carbonate (2 M, 139.48 ml; 278.96 mmol) is added. The reaction mixture is degassed and stirred at 80°C overnight. Organic layer is separated, dried over magnesium sulphate and evaporated under reduced pressure. Column chromatography of crude on silica gel eluted with petroleum ether/dichloromethane (4:1 ratio) gives pure product.
Phase sequence: K 115 I, e/K = 1.72 $V^{-1}$.

Synthesis Example 2b (not according to the invention)

Preparation of

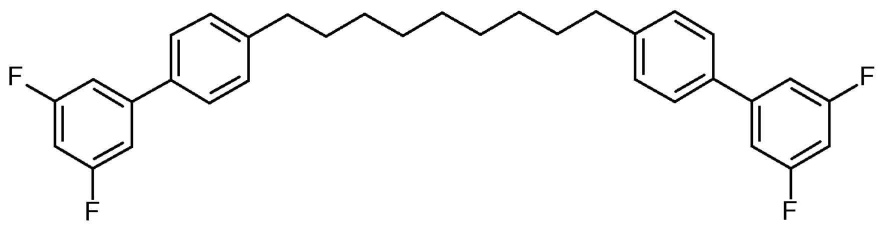

The compound of interest is prepared according to the following scheme.

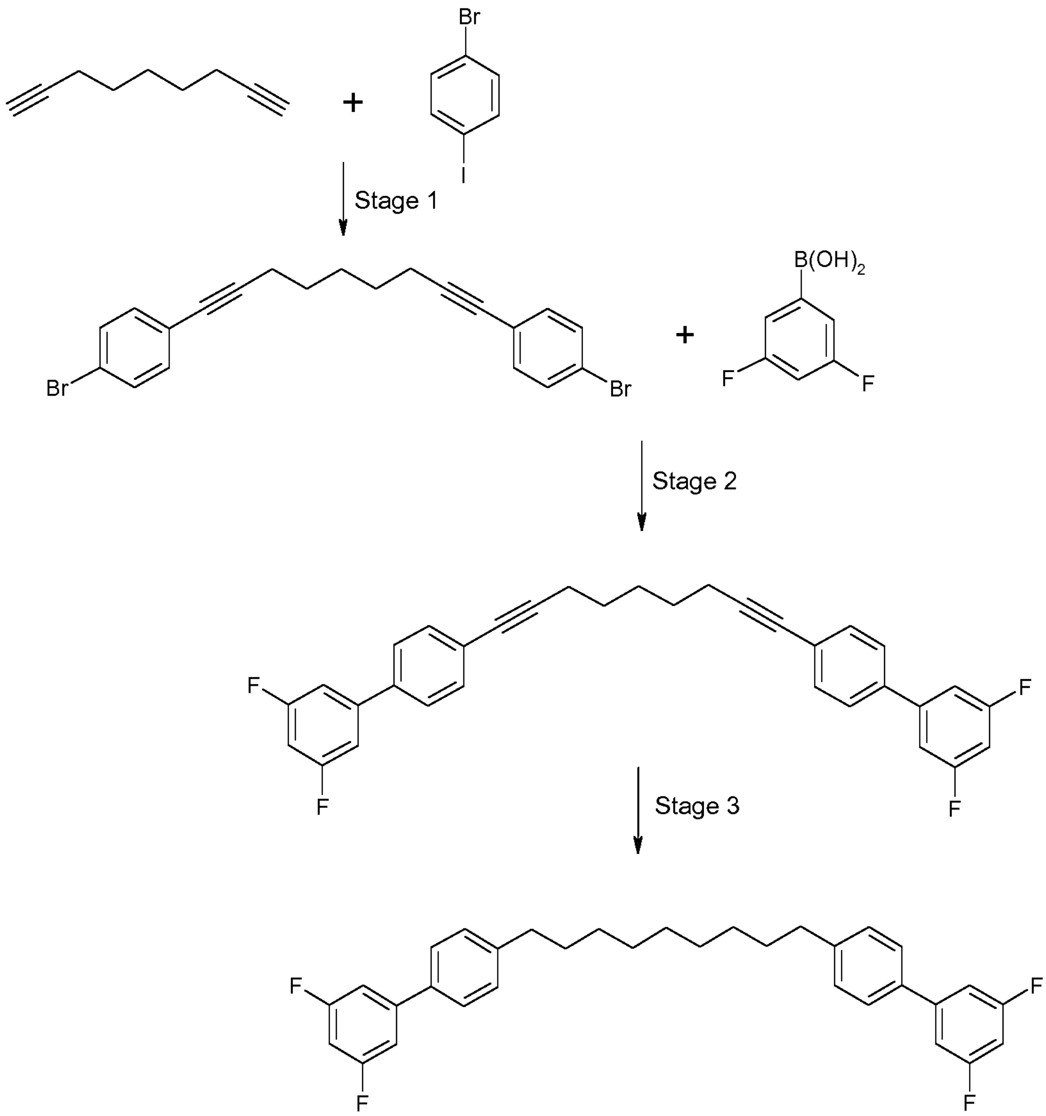


Stages 1 and 2 are carried out as in Example 2a.

Stage 3

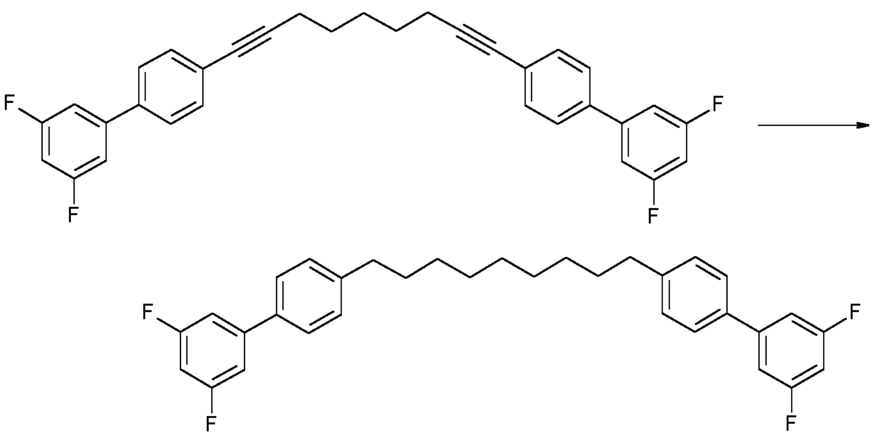

1-[4-[9-[4-(3,5-difluorophenyl)phenyl]nona-1,8-diynyl]phenyl]-3,5-difluorobenzene (7.00 g; 1.00 eq.) in 100 mL methanol/tetrahydrofuran (1:1 ratio) is pumped four times through the H-Cube® using 10% Pd/C as catalyst. The pressure of the system is set to 10 bar, flow rate 10 mL/min and the temperature to 30°C. The solvent is removed under reduced pressure, affording the product as white crystals.
Phase sequence: K 46 I, e/K = 2.0 $V^{-1}$.

Synthesis Example 3

Preparation of

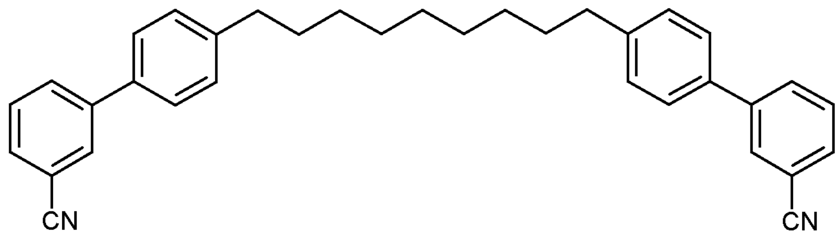

The compound of interest is prepared according to the following scheme.

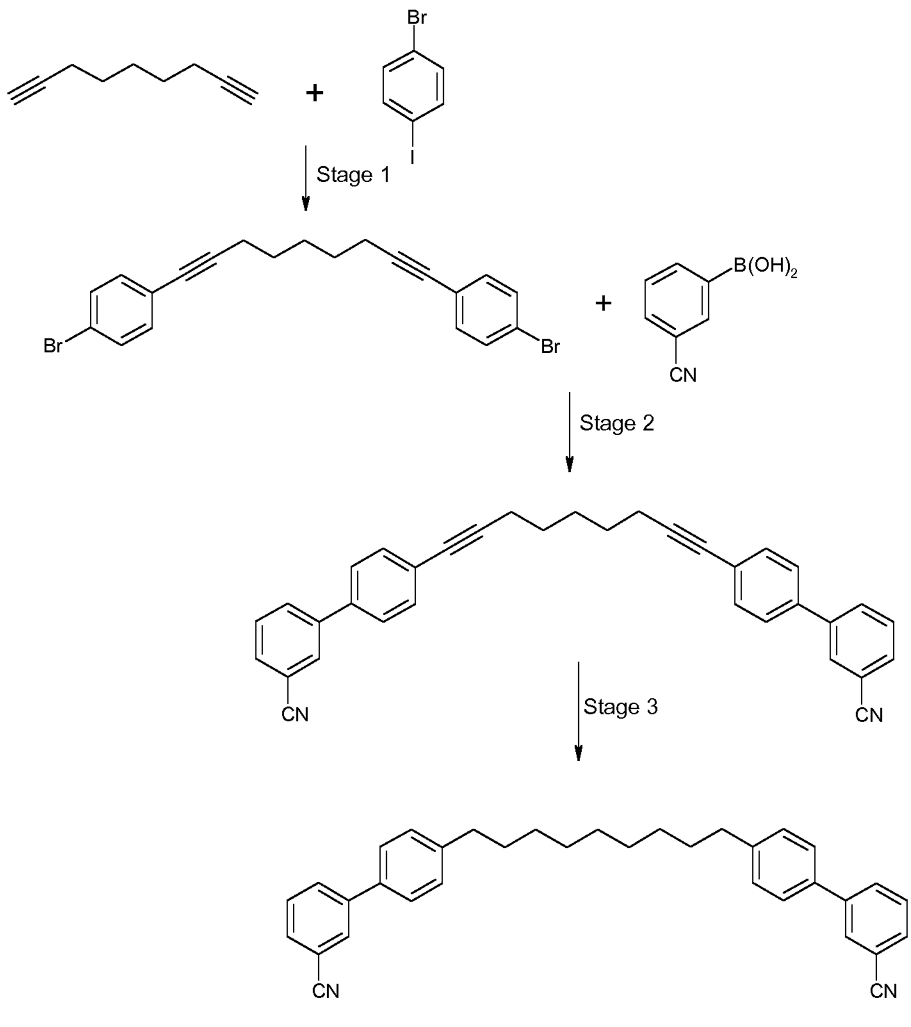


Stage 1 is carried out as in Example 2a.

Stage 2

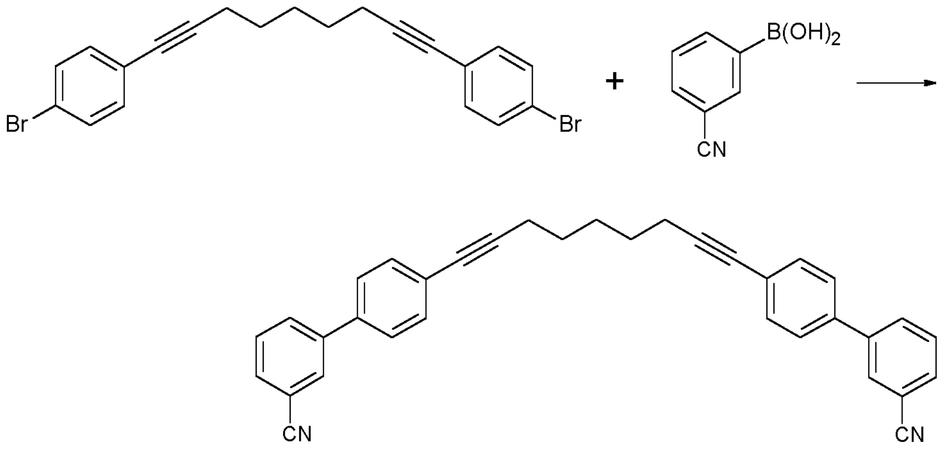

1-Bromo-4-[9-(4-bromophenyl)nona-1,8-diynyl]benzene (8.00 g; 18.60 mmol) and (3-cyanophenyl)boronic acid (5.88 g; 40.00 mmol) are charged into a flask containing 1,4-dioxane (200.00 mL). [1,1'-Bis(diphenylphosphino)ferrocene]dichloropalladium(II), complex with dichloromethane (0.50 g; 0.68 mmol), sodium carbonate (10.60 g; 100.00 mmol) and water (50.00 mL) are added. The reaction mixture is degassed and stirred at 80°C for 3h. The reaction is cooled to room temperature and 100 mL ethyl acetate is added. Organic phase is separated, washed with brine then water, and evaporated under educed pressure. Column chromatography of crude on silica gel eluted with petroleum ether/dichloromethane (7:3 ratio) gives product.

Stage 3

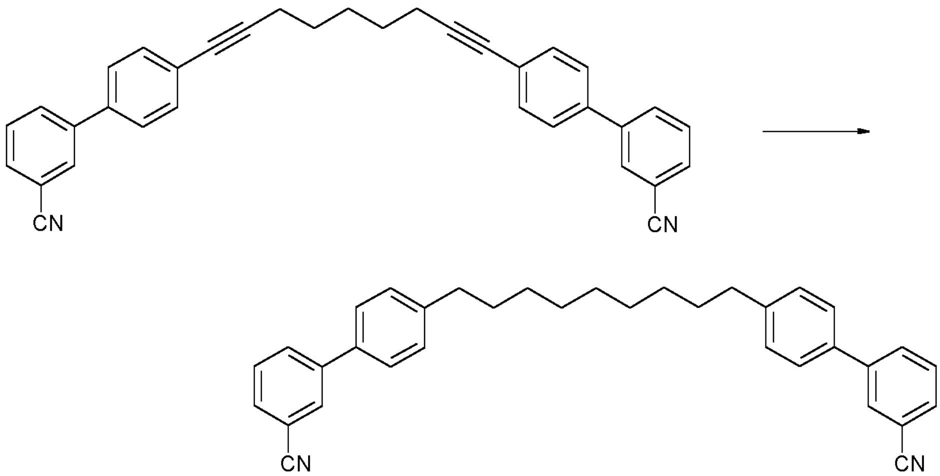

3-[4-[9-[4-(3-cyanophenyl)phenyl]nona-1,8-diynyl]phenyl]benzonitrile (1.50 g; 1.00 eq.) in 100 mL methanol is pumped through the H-Cube® using 10% Pd/C as catalyst. The pressure of the system is set to 30 bar, flow rate 3 mL/min, and the temperature to 30°C. The solvent is removed under reduced pressure. Crystallisation from acetonitrile gives pure product.
Phase sequence: K 84 I.

Synthesis Example 4

Preparation of

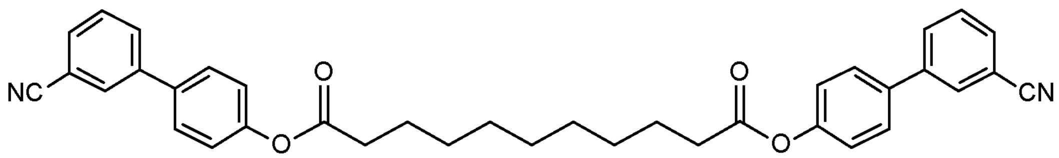

The compound of interest is prepared according to the following scheme.

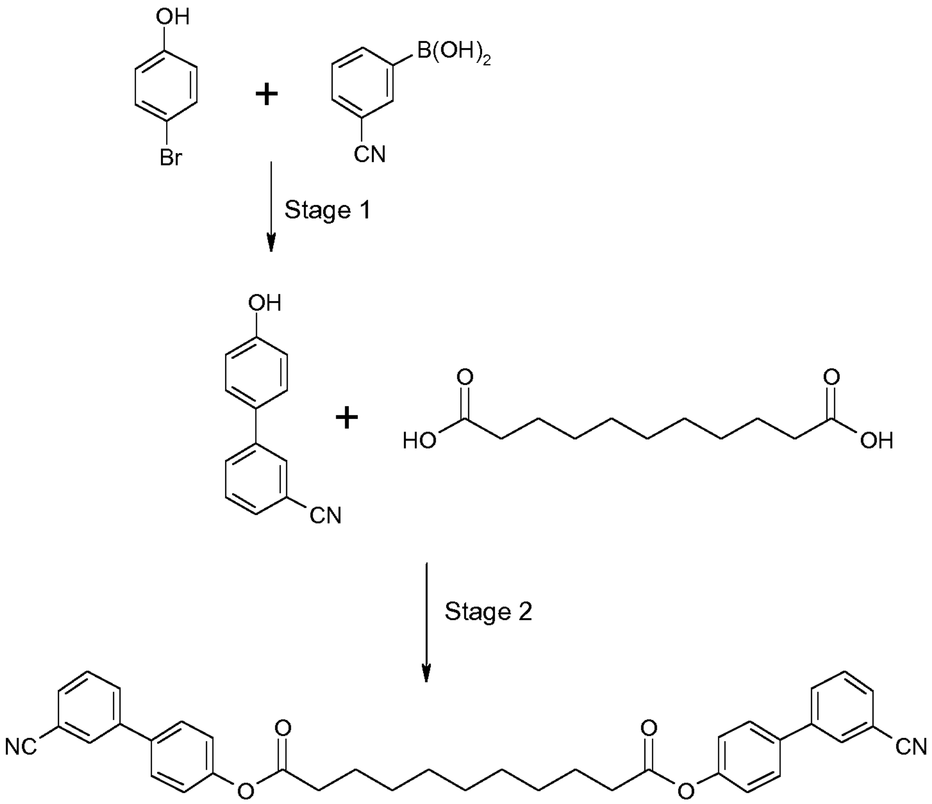


Stage 1

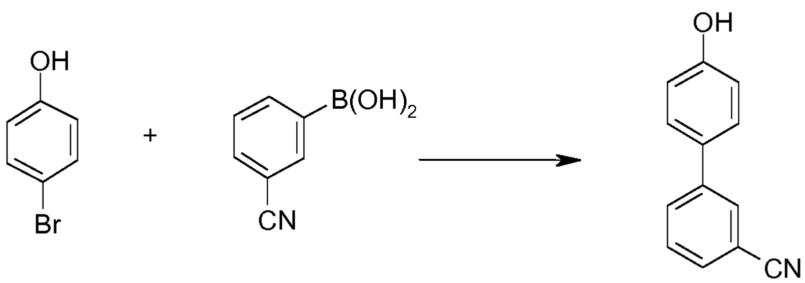

4-Bromo-phenol (11.77 g; 68.05 mmol; 1.00 eq.), (3-cyanophenyl)boronic acid (10.00 g; 68.06 mmol) are charged to a flask containing 1,4-dioxane (200.00 mL). [1,1'-Bis(diphenylphosphino)ferrocene]dichloropalladium(II), complex with dichloromethane (0.50 g; 0.68 mmol), sodium carbonate (14.31 g; 0.14 mol) and water (50.00 mL) are

added. The reaction mixture is degassed and stirred overnight at 80°C. Ethyl acetate (100 mL) is added. Organic phase is separated, washed with brine then water, dried over magnesium sulphate and evaporated under educed pressure. Recrystallisation from dichloromethane/ethyl acetate (1:4 ratio) gives product.

Stage 2

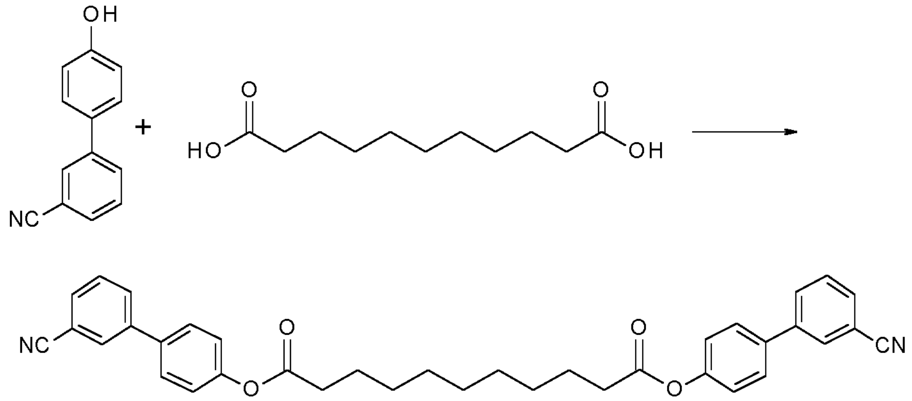

Undecanedioic acid (2.88 g; 13.30 mmol) acid is added to a flask containing 100 mL toluene. 4'-Hydroxy-biphenyl-3-carbonitrile (5.20 g; 26.64 mmol), N,N'-dicyclohexylcarbodiimid (5.57 g; 27.00 mmol) and 4-(dimethylamino)-pyridine (0.61 g; 5.00 mmol) are added and stirred overnight at room temperature. Water (50 mL) is added and organic phase is separated, dried over magnesium sulphate and evaporated under reduced pressure. Column chromatography of crude on silica gel eluted with petroleum ether/dichloromethane (3:2 ratio) followed by recrystallisation from petroleum ether/ethyl acetate gives pure product.
Phase sequence: K 125 (N 84) I, e/K = 1.9 $V^{-1}$.

The above compounds have suitable phase behaviour and flexoelastic ratios and can be useful components in liquid crystal media as shown below, and can in particular be useful to tune the working temperature of high e/K mixtures with regard to the flexoelectric effect.

Use Examples, Mixture Examples

Phase transitions, including clearing point, are initially measured using Differential Scanning Calorimetry (DSC).

Furthermore, typically a 5.6 μm thick cell having an anti-parallel rubbed PI alignment layer is filled on a hotplate at a temperature at which the flexoelectric mixture is in the isotropic phase.

After the cell has been filled phase transitions, including clearing point, are verified by optical inspection. For optical phase transition measurements, a Mettler FP90 hot-stage controller connected to a FP82 hot-stage is used to control the temperature of the cell. The temperature is increased from ambient temperature at a rate of 5 °C per minute until the onset of the isotropic phase is observed. The texture change is observed through crossed polarizers using an Olympus BX51 microscope and the respective temperature is noted.

Wires are then attached to the ITO electrodes of the cell using indium metal. The cell is secured in a Linkam THMS600 hot-stage connected to a Linkam TMS93 hot-stage controller. The hot-stage is secured to a rotation stage in an Olympus BX51 microscope.

The cell is heated until the liquid crystal is completely isotropic. The cell is then cooled under an applied electric field until the sample is completely nematic. The driving waveform is supplied by a Tektronix AFG3021B arbitrary function generator, which is sent through a Newtons4th LPA400 power amplifier before being applied to the cell. The cell response is monitored with a Thorlabs PDA55 photodiode. Both input waveforms and optical response are measured using a Tektronix TDS 2024B digital oscilloscope.

In order to measure the flexoelastic response of the material, the change in the size of the tilt of the optical axis is measured as a function of increasing voltage. In this connection the following equation is used

$$\tan\varphi = \frac{P_0}{2\pi}\frac{e}{K}E$$

wherein φ is the tilt in the optical axis from the original position (i.e. when E = 0), E is the applied field, K is the elastic constant (average of $K_1$ and $K_3$) and e is the flexoelectric coefficient, wherein $e = e_1 + e_3$. The applied field is monitored using a HP 34401A multimeter. The tilt angle is measured using the aforementioned microscope and oscilloscope. The undisturbed cholesteric pitch, $P_0$, is measured using an Ocean Optics USB4000 spectrometer attached to a computer. The selective reflection band is obtained and the pitch is determined from the spectral data.

The mixtures according to the invention shown in the following examples are well suitable for use in flexoelectric displays. To achieve a suitable cholesteric pitch appropriate concentrations of chiral dopant or dopants can be used.

Reference Mixture Example 1

The host mixture H-0 is prepared and investigated, *inter alia* studying its properties for alignment.

| Composition | | |
|---|---|---|
| Compound | | |
| No. | Abbreviation | Conc. /% |
| 1 | F-PGI-O-9-O-GP-F | 25.0 |
| 2 | F-PGI-O-9-O-PP-N | 25.0 |
| 3 | F-PGI-ZI-9-Z-GP-F | 25.0 |
| 4 | F-PGI-ZI-9-Z-PP-N | 25.0 |
| Σ | | 100.0 |

The alignment of the mixtures is determined in a test cell with anti-parallel rubbed PI orientation layers, for planar alignment, having a cell gap of 10 μm at a wavelength of 550 nm. The optical retardation of the samples is determined using an ellipsometer instrument for various angles of incidence ranging from -60° to +40°.

The results for H-0 are compiled in the following table, wherein the sample H-0 shows an optical retardation of 25 nm under perpendicular observation, i.e. at an angle of incidence of 0°. This already indicates the presence of a homogeneous alignment. For various angles of incidence the values of the retardation range from 2 nm to 55 nm. Although scattering, as a function of the angle of incidence, is quite significant, there appears to be a trend for the retardation to increase with increasing angle of incidence. However, the significant scatter of the retardation values indicates a rather poor quality of the homeotropic alignment.

| Mixt. H-0 | Angle/° | -60 | -40 | -20 | 0 | 20 | 40 |
|---|---|---|---|---|---|---|---|
| | d·Δn / nm | 2 | 33 | 42 | 25 | 55 | 44 |

Comparative Mixture Example 1

Mixture C-1

2 % of the chiral dopant R-5011 are added in the mixture H-0 giving the mixture C-1, which is investigated for its properties.

| Composition | | |
|---|---|---|
| Compound | | |
| No. | Abbreviation | Conc. /% |
| 1 | R-5011 | 2.0 |
| 2 | F-PGI-O-9-O-GP-F | 24.5 |
| 3 | F-PGI-O-9-O-PP-N | 24.5 |
| 4 | F-PGI-ZI-9-Z-GP-F | 24.5 |
| 5 | F-PGI-ZI-9-Z-PP-N | 24.5 |
| Σ | | 100.0 |

The mixture C-1 may be used for the USH mode. It has a clearing point of 82°C and a lower transition temperature [T(N2,N)] of 33°C. It has a cholesteric pitch of 301 nm at 35°C. The e/K of this mixture is 1.9 $Cm^{-1}N^{-1}$ at a temperature of 34.8°C.

Mixture Example 1

In a mixture of H-0 10% of the compound of Synthesis Example 1 and 2% of chiral dopant are comprised to give mixture M-1, which is investigated.

| Composition | | |
|---|---|---|
| Compound | | |
| No. | Abbreviation | Conc. /% |
| 1 | R-5011 | 2.0 |
| 2 | F-PGI-O-9-O-GP-F | 22.0 |
| 3 | F-PGI-O-9-O-PP-N | 22.0 |
| 4 | F-PGI-ZI-9-Z-GP-F | 22.0 |
| 5 | F-PGI-ZI-9-Z-PP-N | 22.0 |
| 6 | Compound 1* | 10.0 |
| Σ | | 100.0 |
| Remark: *) Compound of Synthesis Example 1. | | |

This mixture M-1 is well suitable for the USH mode.
It has a cholesteric pitch of 307 nm at 40.2°C.
The e/K of this mixture is 1.96 $Cm^{-1}N^{-1}$ at a temperature of 39.3°C.

Mixture Example 2 (not according to the invention)

In a mixture of H-0 10% of the compound of Synthesis Example 2a and 2% of dopant are comprised to give mixture M-2, which is investigated.

| Composition | | |
|---|---|---|
| Compound | | |
| No. | Abbreviation | Conc. /% |
| 1 | R-5011 | 2.0 |
| 2 | F-PGI-O-9-O-GP-F | 22.0 |
| 3 | F-PGI-O-9-O-PP-N | 22.0 |
| 4 | F-PGI-ZI-9-Z-GP-F | 22.0 |
| 5 | F-PGI-ZI-9-Z-PP-N | 22.0 |
| 6 | Compound 2a* | 10.0 |
| Σ | | 100.0 |
| Remark: *) Compound of Synthesis Example 2a. | | |

This mixture M-2 is well suitable for the USH mode. It has a cholesteric pitch of 311 nm at 40°C. The e/K of this mixture is 1.72 $Cm^{-1}N^{-1}$ at a temperature of 39.3°C.

Mixture Example 3 (not according to the invention)

In a mixture of H-0 10% of the compound of Synthesis Example 2b and 2% of chiral dopant are comprised to give mixture M-3, which is investigated.

| Composition | | |
|---|---|---|
| Compound | | |
| No. | Abbreviation | Conc. /% |
| 1 | R-5011 | 2.0 |
| 2 | F-PGI-O-9-O-GP-F | 22.0 |
| 3 | F-PGI-O-9-O-PP-N | 22.0 |
| 4 | F-PGI-ZI-9-Z-GP-F | 22.0 |
| 5 | F-PGI-ZI-9-Z-PP-N | 22.0 |
| 6 | Compound 2b* | 10.0 |
| Σ | | 100.0 |
| Remark: *) Compound of Synthesis Example 2b. | | |

This mixture M-3 is well suitable for the USH mode. It has a cholesteric pitch of 277 nm at 35°C. The e/K of this mixture is 2.00 $Cm^{-1}N^{-1}$ at a temperature of 36.6°C.

## Claims

**1.** A bimesogenic compound selected from the group of compounds of the following formulae

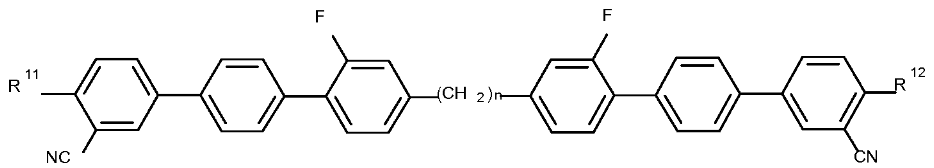

IA

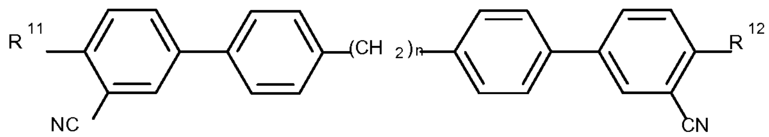

ID

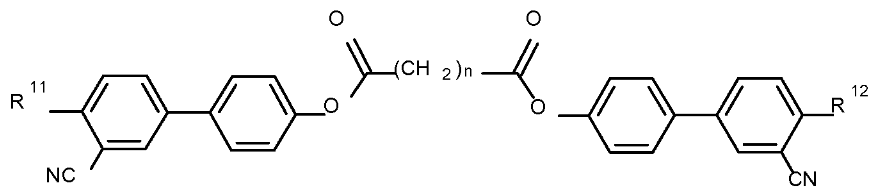

IE

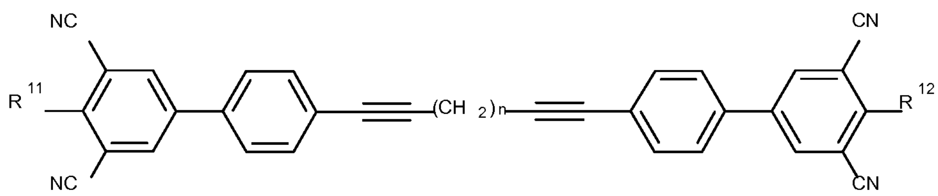

IG

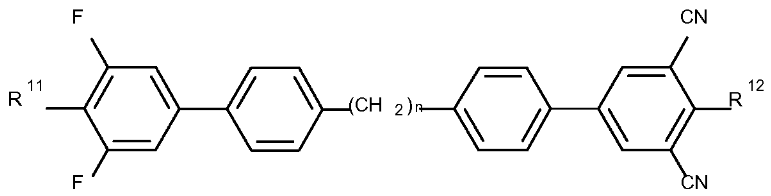

IH

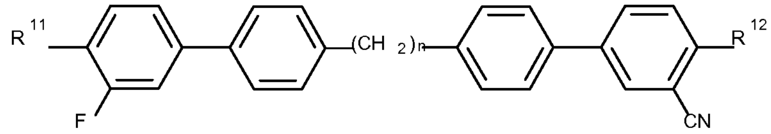

IJ

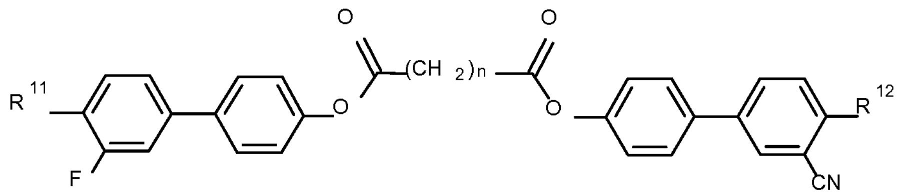

IL

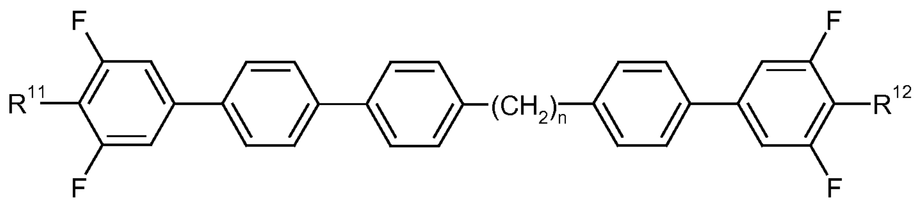

IN

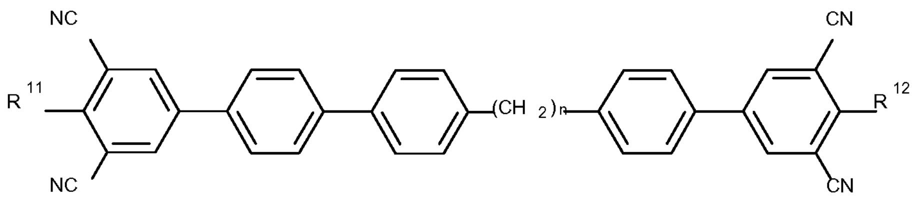

IO

wherein

$R^{11}$ and $R^{12}$ denote H, and
n is an integer of 3 or from 5 to 15.

**2.** Use of the bimesogenic compound according to claim 1 in a liquid crystalline medium.

**3.** A liquid crystalline medium comprising the bimesogenic compound according to claim 1.

**4.** The liquid crystalline medium according to claim 3, additionally comprising a chiral dopant.

**5.** The liquid crystalline medium according to claim 3 or 4, additionally comprising one or more compounds selected from the group of the compounds of formula II

$$R^{21}\text{-}MG^{21}\text{-}X^{21}\text{-}Sp^{2}\text{-}X^{22}\text{-}MG^{22}\text{-}R^{22} \qquad II$$

wherein

$R^{21}$ and $R^{22}$ are each independently H, F, Cl, CN, NCS or a straight-chain or branched alkyl group with 1 to 25 C atoms, said alkyl group optionally being substituted by one or more halogen and/or CN groups and optionally

having one or more non-adjacent $CH_2$ groups replaced, in each occurrence independently from one another, by -O-, -S-, -NH-, -N($CH_3$)-, -CO-, -COO-, -OCO-, -O-CO-O-, -S-CO-, -CO-S-, -CH=CH-, -CH=CF-, -CF=CF- or -C≡C-,

$MG^{21}$ and $MG^{22}$ are each independently a mesogenic group,

$Sp^2$ is a spacer group comprising 5 to 40 C atoms, wherein one or more non-adjacent $CH_2$ groups may be replaced by -O-, -S-, -NH-, -N($CH_3$)-, -CO-, -O-CO-, -S-CO-, -O-COO-, -CO-S-, -CO-O-, -CH(halogen)-, -CH(CN)-, -CH=CH- or -C≡C-, and

$X^{21}$ and $X^{22}$ are each independently -O-, -S-, -CO-, -COO-, -OCO-, -O-CO-O-, -CO-NH-, -NH-CO-, -$CH_2CH_2$-, -$OCH_2$-, -$CH_2O$-, -$SCH_2$-, -$CH_2S$-, -CH=CH-, -CH=CH-COO-, -OCO-CH=CH-, -C≡C- or a single bond,

provided that the compounds as set forth in claim 1 are excluded from the compounds of formula II.

**6.** Use of the liquid crystalline medium according to one or more of claims 3 to 5 in a liquid crystal device.

**7.** A liquid crystal device comprising a liquid crystalline medium which comprises two or more components, wherein at least one of the components is the bimesogenic compound according to claim 1.

**8.** The liquid crystal device according to claim 7, wherein the device is a flexoelectric device.

## Patentansprüche

**1.** Bimesogene Verbindung, ausgewählt aus der Gruppe der Verbindungen der folgenden Formeln

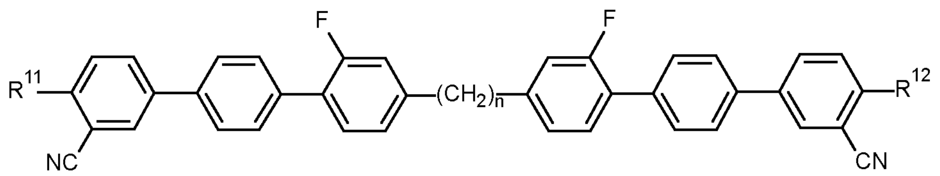

IA

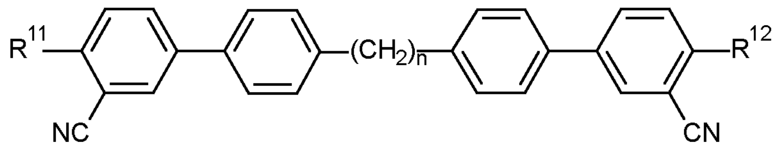

ID

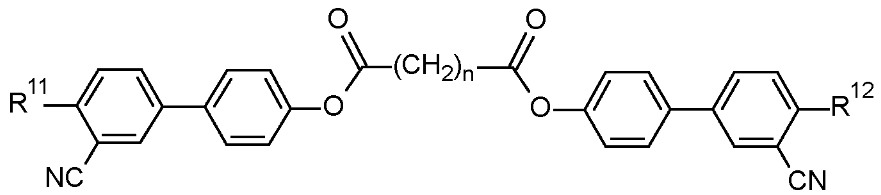

IE

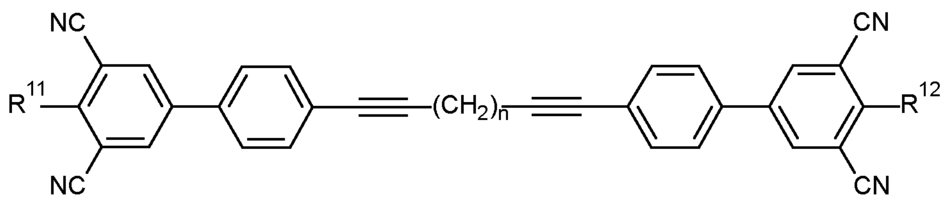

IG

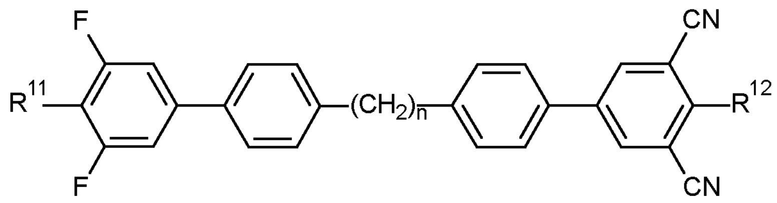

IH

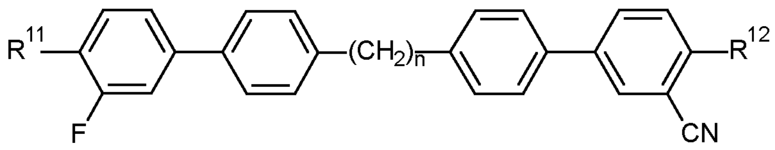

IJ

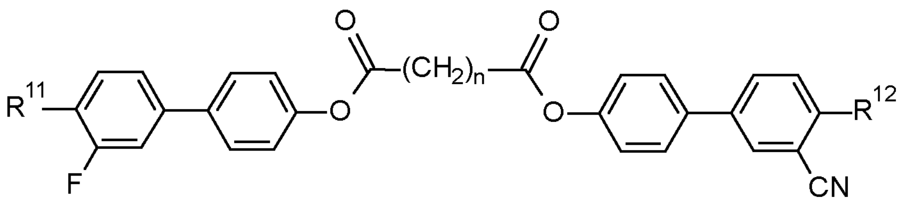

IL

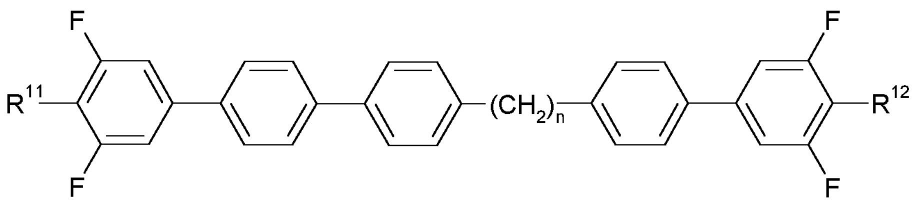

IN

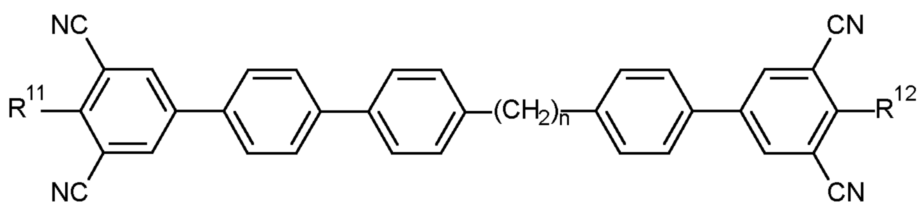

IO

bei denen

$R^{11}$ und $R^{12}$ H bedeuten und
n eine ganze Zahl von 3 oder von 5 bis 15 ist.

**2.** Verwendung der bimesogenen Verbindung nach Anspruch 1 in einem flüssigkristallinen Medium.

**3.** Flüssigkristallines Medium enthaltend die bimesogene Verbindung nach Anspruch 1.

**4.** Flüssigkristallines Medium nach Anspruch 3, das zusätzlich einen chiralen Dotierstoff enthält.

**5.** Flüssigkristallines Medium nach Anspruch 3 oder 4, das zusätzlich eine oder mehrere Verbindungen enthält, die ausgewählt sind aus der Gruppe der Verbindungen der Formel II

$$R^{21}\text{-}MG^{21}\text{-}X^{21}\text{-}Sp^{2}\text{-}X^{22}\text{-}MG^{22}\text{-}R^{22} \qquad \text{II}$$

bei der

$R^{21}$ und $R^{22}$ jeweils unabhängig H, F, Cl, CN, NCS oder eine geradkettige oder verzweigte Alkylgruppe mit 1 bis 25 C-Atomen sind, wobei die Alkylgruppe gegebenenfalls durch ein oder mehrere Halogen- und/oder CN-Gruppen substituiert ist und gegebenenfalls eine oder mehrere nicht benachbarte $CH_2$-Gruppen aufweist, die bei jedem Auftreten unabhängig voneinander durch -O-, -S-, -NH-, -N($CH_3$)-, -CO-, -COO-, -OCO-, -O -CO-O-, -S-CO-, -CO-S-, -CH=CH-, -CH=CF-, -CF=CF- oder -C≡C- ersetzt sind,

$MG^{21}$ und $MG^{22}$ jeweils unabhängig eine mesogene Gruppe sind,

$Sp^2$ eine Spacergruppe mit 5 bis 40 C-Atomen ist, bei der eine oder mehrere nicht benachbarte $CH_2$-Gruppen durch -O-, -S-, -NH-, -N($CH_3$)-, -CO-, -O-CO-, -S-CO-,-O-COO-, -CO-S-, -CO-O-, -CH(Halogen)-, -CH(CN)-, -C H=CH- oder -C≡C- ersetzt sein können und

$X^{21}$ und $X^{22}$ jeweils unabhängig -O-, -S-, -CO-, -COO-, -OCO-, -O-CO-O-,-CO-NH-, -NH-CO-, -$CH_2CH_2$-, -$OCH_2$-, -$CH_2O$-, -$SCH_2$-, -$CH_2S$-, -CH=CH-, -CH=CH-COO-, -OCO-CH=CH-, -C≡ C- oder eine Einfachbindung sind,

vorausgesetzt, dass die Verbindungen wie in Anspruch 1 dargelegt von den Verbindungen der Formel II ausgenommen sind.

**6.** Verwendung des flüssigkristallinen Mediums nach einem oder mehreren der Ansprüche 3 bis 5 in einer Flüssigkristallvorrichtung.

**7.** Flüssigkristallvorrichtung enthaltend ein flüssigkristallines Medium, das zwei oder mehr Komponenten enthält, bei denen mindestens eine der Komponenten die bimesogene Verbindung nach Anspruch 1 ist.

**8.** Flüssigkristallvorrichtung nach Anspruch 7, bei der es sich um eine flexoelektrische Vorrichtung handelt.

**Revendications**

**1.** Composé bimésogène sélectionné parmi le groupe de composés des formules qui suivent :

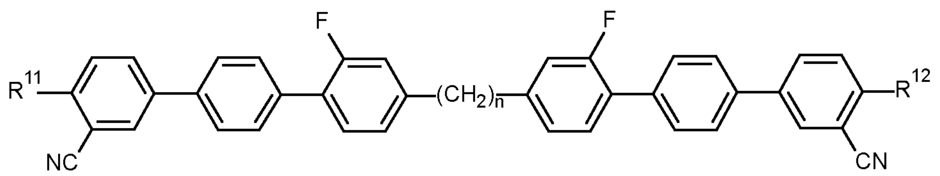

IA

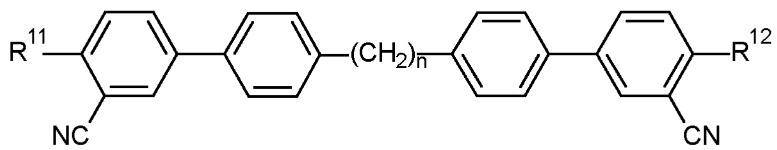

ID

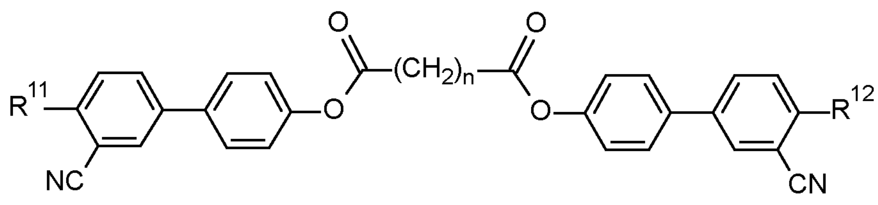

IE

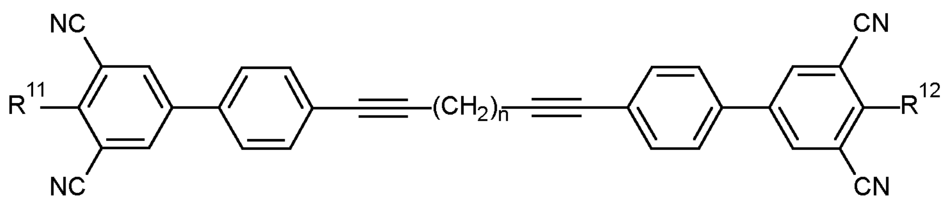

IG

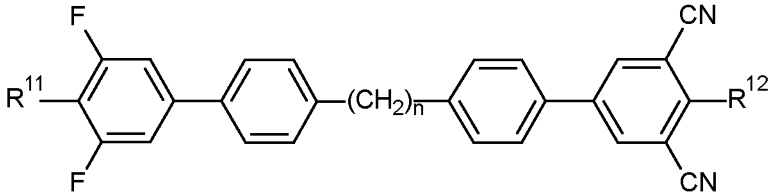

IH

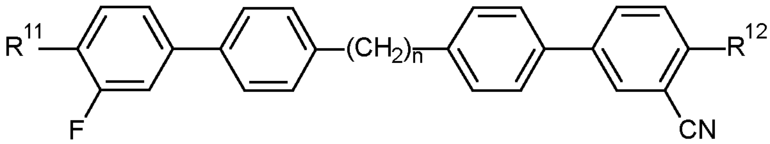

IJ

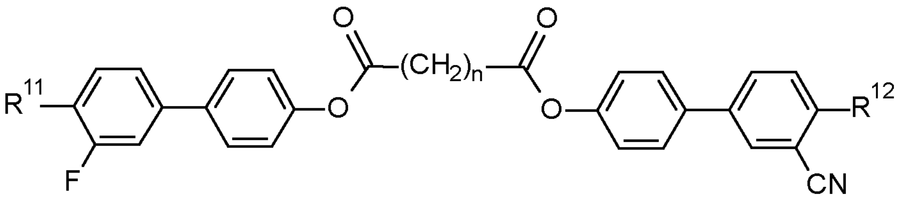

IL

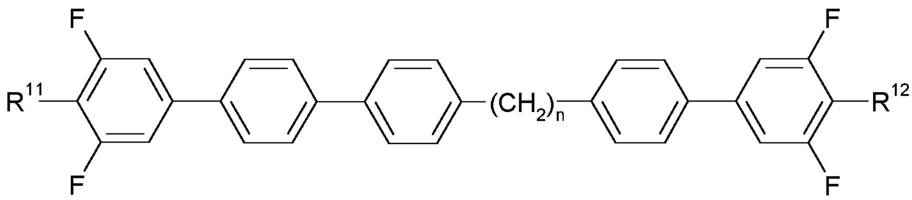

IN

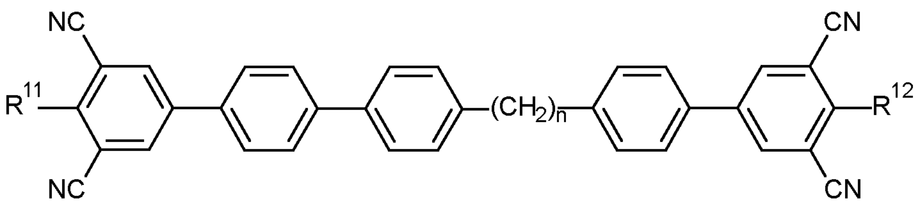

IO

dans lesquelles :

$R^{11}$ et $R^{12}$ représentent H, et
n est un entier de 3 ou de 5 à 15.

**2.** Utilisation du composé bimésogène selon la revendication 1 dans un milieu cristallin liquide.

**3.** Milieu cristallin liquide comprenant le composé bimésogène selon la revendication 1.

**4.** Milieu cristallin liquide selon la revendication 3, comprenant de façon additionnelle un dopant chiral.

**5.** Milieu cristallin liquide selon la revendication 3 ou 4, comprenant de façon additionnelle un ou plusieurs composé(s) qui est/sont sélectionné(s) parmi le groupe des composés de la formule II :

$$R^{21}\text{-}MG^{21}\text{-}X^{21}\text{-}Sp^{2}\text{-}X^{22}\text{-}MG^{22}\text{-}R^{22} \qquad \text{II}$$

dans laquelle :

$R^{21}$ et $R^{22}$ sont chacun, de manière indépendante, H, F, Cl, CN, NCS ou un groupe alkyle en chaîne droite ou ramifié qui comporte de 1 à 25 atome(s) de C, ledit groupe alkyle étant en option substitué par un ou plusieurs

groupe(s) halogène et/ou CN et comportant en option un ou plusieurs groupe(s) $CH_2$ non adjacents qui est/sont remplacé(s), pour chaque occurrence de manière indépendante les uns des autres, par -O-, -S-, -NH-, -N($CH_3$)-, -CO-, -COO-, -OCO-, -O-C O-O-, -S-CO-, -CO-S-, -CH=CH-, -CH=CF-, -CF=CF- ou -C≡C-,

$MG^{21}$ et $MG^{22}$ sont chacun, de manière indépendante, un groupe mésogène,

$Sp^2$ est un groupe d'espaceur qui comprend de 5 à 40 atomes de C, dans lequel un ou plusieurs groupe(s) $CH_2$ non adjacents peut/peuvent être remplacé(s) par -O-, -S-, -NH-, -N($CH_3$)-, -CO-, -O-CO-, -S-CO-, -O-COO-, -CO-S-, -CO-O-, -CH(halogène)-, -CH(CN)-, -CH =CH- ou -C≡C-, et

$X^{21}$ et $X^{22}$ sont chacun, de manière indépendante, -O-, -S-, -CO-, -COO-, -OCO-, -O-CO-O-, -CO-N H-, -NH-CO-, -$CH_2CH_2$-, -$OCH_2$-, -$CH_2O$-, -$SCH_2$-, -$CH_2$ S-, -CH=CH-, -CH=CH-COO-, -OCO-CH=CH-, -C≡C- o u une liaison simple,

étant entendu que les composés tels que mis en exergue selon la revendication 1 sont exclus des composés de la formule II.

**6.** Utilisation du milieu cristallin liquide selon une ou plusieurs des revendications 3 à 5 dans un dispositif à cristaux liquides.

**7.** Dispositif à cristaux liquides comprenant un milieu cristallin liquide qui comprend deux composants ou plus, dans lequel au moins l'un des composants est le composé bimésogène selon la revendication 1.

**8.** Dispositif à cristaux liquides selon la revendication 7, dans lequel le dispositif est un dispositif flexoélectrique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 4000451
- EP 0588568 A
- WO 2013004333 A1
- WO 2016008561 A1
- EP 0971016 A
- GB 2356629 A
- WO 2014005672 A
- EP 0233688 A
- WO 9800428 A
- GB 2328207 A


### Non-patent literature cited in the description


- **CHANDRASEKHAR.** Liquid Crystals. Cambridge University Press, 1992
- **P.G. DE GENNES et al.** The Physics of Liquid Crystals. Oxford Science Publications, 1995
- **HORI, K. ; LIMURO, M. ; NAKAO, A. ; TORIUMI, H.** *J. Mol. Struc.,* 2004, vol. 699, 23-29
- **COLES, H.J. ; MUSGRAVE, B. ; COLES, M.J. ; WILLMOTT, J.** *J. Mater. Chem.,* 2001, vol. 11, 2709-2716
- **H. STEINBERG ; DONALD J CRAM.** Polynuclear Paracyclophanes. *JACS,* 1952, vol. 74, 5388-91
- **H.J. COLES et al.** *J. Appl. Phys.,* 2006, vol. 99, 034104
- **BARNES, P.J. ; DOUGLAS, A.G. ; HEEKS, S.K. ; LUCKHURST, G.R.** *Liquid Crystals,* 1993, vol. 13 (4), 603-613
- **HENDERSON, P.A. ; NIEMEYER, O. ; IMRIE, C.T.** *Liquid Crystals,* 2001, vol. 28 (3), 463-472
- **HENDERSON, P.A. ; SEDDON, J.M. ; IMRIE, C.T.** *Liquid Crystals,* 2005, vol. 32 (11-12), 1499-1513
- **PANOV, V.P. ; NGARAJ, M. ; VIJ, J.K. ; PANARIN, Y.P. ; KOHLMEIER, A. ; TAMBA, M.G. ; LEWIS, R.A. ; MEHL, G.H.** *Phys.Rev.Lett.,* 2010, vol. 105, 1678011-1678014
- **P. RUDQUIST et al.** *Liq. Cryst.,* 1997, vol. 23 (4), 503
- **J. COGNARD.** *Mol.Cryst.Liq.Cryst.,* 1981, vol. 78 (1), 1-77